(19) Europäisches Patentamt
European Patent Office
Office européen des brevets

(11) EP 4 293 751 B1

(12) # EUROPEAN PATENT SPECIFICATION

(45) Date of publication and mention of the grant of the patent:
**30.09.2026 Bulletin 2026/40**

(21) Application number: **22916673.1**

(22) Date of filing: **26.12.2022**

(51) International Patent Classification (IPC):
***H01M 4/36*** *(2006.01)* ***H01M 4/62*** *(2006.01)*
***H01M 4/131*** *(2010.01)* ***H01M 4/1391*** *(2010.01)*
***H01M 10/0525*** *(2010.01)* ***C01G 53/00*** *(2025.01)*
***H01M 4/02*** *(2006.01)* ***H01M 4/04*** *(2006.01)*
*H01M 4/525* *(2010.01)*

(52) Cooperative Patent Classification (CPC):
**H01M 4/131; C01G 53/506; H01M 4/0404; H01M 4/1391; H01M 4/366; H01M 4/62; H01M 4/625; H01M 10/0525;** H01M 4/525; Y02E 60/10

(86) International application number:
**PCT/KR2022/021335**

(87) International publication number:
**WO 2023/128532 (06.07.2023 Gazette 2023/27)**

(54) **POSITIVE ELECTRODE ACTIVE MATERIAL, POSITIVE ELECTRODE ACTIVE MATERIAL SLURRY, POSITIVE ELECTRODE, LITHIUM-ION SECONDARY BATTERY AND METHOD FOR PREPARING POSITIVE ELECTRODE ACTIVE MATERIAL**

AKTIVES MATERIAL DER POSITIVEN ELEKTRODE, AUFSCHLÄMMUNG DES AKTIVEN MATERIALS DER POSITIVEN ELEKTRODE, POSITIVE ELEKTRODE, LITHIUM-IONEN-SEKUNDÄRBATTERIE UND VERFAHREN ZUR HERSTELLUNG DES AKTIVEN MATERIALS DER POSITIVEN ELEKTRODE

MATÉRIAU ACTIF D’ÉLECTRODE POSITIVE, SUSPENSION DE MATÉRIAU ACTIF D’ÉLECTRODE POSITIVE, ÉLECTRODE POSITIVE, BATTERIE SECONDAIRE LITHIUM-ION ET PROCÉDÉ DE PRÉPARATION DU MATÉRIAU ACTIF D’ÉLECTRODE POSITIVE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **27.12.2021 JP 2021212767**

(43) Date of publication of application:
**20.12.2023 Bulletin 2023/51**

(73) Proprietor: **LG Energy Solution, Ltd.**
**Seoul 07335 (KR)**

(72) Inventors:
- **CHIHARA, Kuniko**
  **Yokohama-shi, Kanagawa 220-0011 (JP)**
- **MATSUBARA, Keiko**
  **Yokohama-shi, Kanagawa 220-0011 (JP)**

(74) Representative: **Hoffmann Eitle**
**Patent- und Rechtsanwälte PartmbB**
**Arabellastraße 30**
**81925 München (DE)**

(56) References cited:
**KR-A- 20130 076 885**
**KR-A- 20180 071 438**
**KR-A- 20190 105 240**
**US-A1- 2007 082 265**
**US-A1- 2010 062 339**
**US-A1- 2018 175 440**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- SU ZHONG, TONG CHUAN-JIA, HE DE-QING, LAI CHAO, LIU LI-MIN, WANG CHAO, XI KAI: "Ultra-small B 2 O 3 nanocrystals grown in situ on highly porous carbon microtubes for lithium–iodine and lithium–sulfur batteries", JOURNAL OF MATERIALS CHEMISTRY A, ROYAL SOCIETY OF CHEMISTRY, GB, vol. 4, no. 22, 1 January 2016 (2016-01-01), GB , pages 8541 - 8547, XP093075608, ISSN: 2050-7488, DOI: 10.1039/C6TA00706F

## Description

### TECHNICAL FIELD

The present disclosure relates to a positive electrode active material, a positive electrode active material slurry, a positive electrode, a lithium-ion secondary battery and a method for preparing a positive electrode active material.

### BACKGROUND ART

As technical development of mobile instruments has been conducted, secondary batteries as energy sources have been increasingly in demand. Among such secondary batteries, lithium secondary batteries having high energy density and operating voltage and showing long cycle life and a low self-discharge rate have been commercialized and used widely. Currently, active studies have been performed to provide such lithium-ion secondary batteries with high capacity.

For example, known technologies for providing lithium-ion secondary batteries with high capacity include forming a coating film based on a boron ingredient on the surface of an electrode active material.

Patent document 4 describes a positive electrode active material for all-solid batteries including a core comprising a lithium-containing metal oxide, and a coating layer comprising LiI applied to the surface of the core.

Patent document 5 describes a positive electrode material for non-aqueous electrolyte lithium-ion battery having an oxide containing lithium and nickel, and a lithium compound which is deposited on a surface of the oxide and covers nickel present on the surface of the oxide.

[References]

[Patent Documents]

Patent Document 1: Japanese Patent Publication No. 6284542
Patent Document 2: Japanese Patent Laid-Open No. 2017-152275
Patent Document 3: Japanese Patent Laid-Open No. 2019-175872
Patent Document 4: US 2018/0175440 A1
Patent Document 5: US 2007/0082265 A1

### DISCLOSURE

#### Technical Problem

However, when forming such a coating film, there are cases where electrode resistance characteristics are not obtained sufficiently. Therefore, there is a need for balancing excellent capacity characteristics and electrode resistance characteristics.

Therefore, the present disclosure is directed to providing a positive electrode active material for a lithium-ion secondary battery having excellent capacity characteristics and electrode resistance characteristics, a positive electrode active material slurry, a positive electrode, a lithium-ion secondary battery and a method for preparing a positive electrode active material.

#### Technical Solution

According to an embodiment of the present disclosure, there is provided a positive electrode active material including a core containing a lithium transition metal oxide, a coating portion at least partially covering the surface of the core and containing iodine and boron, wherein the spectrum of $I3d_{5/2}$ observed by X-ray photoelectron spectroscopy of the positive electrode active material has a peak at 622-626 eV, wherein the content of iodine is 0.001-5 parts by weight based on 100 parts by weight of lithium transition metal oxide, and wherein content of boron is 0.001-5 parts by weight based on 100 parts by weight of lithium transition metal oxide.

As used herein, 'lithium transition metal oxide' refers to a compound containing lithium and a transition metal and having a transition metal-oxygen bond, and also includes a compound further containing a typical metal element such as aluminum, or a non-metal element such as iodine, other than oxygen. Herein, the term 'covering'refers to at least partially covering the surface of an object, and also includes presence of a chemical bond on the surfaces of particles and covering

surfaces of particles physically with no chemical bond. For example, when a peak derived from iodine and boron is detected in the X-ray photoelectron spectroscopy (XPS) of the surfaces of active material particles, this may be referred to as the expression 'a coating portion containing iodine and boron is formed'.

**In** the positive electrode active material as defined in the above embodiment, the coating portion may include iodine having an oxidation number of +5 to+7.

According to another embodiment of the present disclosure, there is provided a positive electrode active material slurry for a lithium-ion secondary battery, including the positive electrode active material as defined in the above embodiment.

According to still another embodiment of the present disclosure, there is provided a positive electrode for a lithium-ion secondary battery which has a positive electrode active material layer, including the positive electrode active material as defined in the above embodiment and formed on a current collector.

**In** the positive electrode as defined in the above embodiment, the positive electrode active material layer may further include a conductive material including carbon nanotubes.

According to still another embodiment of the present disclosure, there is provided a lithium-ion secondary battery including the positive electrode as defined in the above embodiment.

According to yet another embodiment of the present disclosure, there is provided a method for preparing the positive electrode active material of the invention, including the steps of: preparing a mixture containing a lithium transition metal oxide, iodine and boron; and firing the mixture.

The method for preparing a positive electrode active material as defined in the above embodiment may include a step of adding an iodine-containing iodine ingredient as an ingredient of the mixture. The iodine ingredient may include at least one selected from the group consisting of simple substance iodine ($I_2$), lithium iodide (LiI), sodium iodide (NaI), potassium iodide (KI), iodoform ($CHI_3$), carbon tetraiodide ($CI_4$), ammonium iodide ($NH_4I$), iodic acid ($HIO_3$), lithium iodate ($LiIO_3$), sodium iodate ($NaIO_3$), potassium iodate ($KIO_3$), ammonium iodate ($NH_4IO_3$), meta-periodic acid ($HIO_4$), ortho-periodic acid ($H_5IO_6$), lithium periodate ($LiIO_4$), sodium periodate ($NaIO_4$), potassium periodate ($KIO_4$), iodine oxide (IV) ($I_2O_4$), iodine oxide (V)($I_2O_5$) and iodine oxide (IV, V)($I_4O_9$). As used herein, 'iodine ingredient' refers to any ingredient containing iodine.

In the method for preparing a positive electrode active material as defined in the above embodiment, the iodine ingredient may include simple substance iodine ($I_2$).

The method for preparing a positive electrode active material as defined in the above embodiment may include adding a boron-containing boron ingredient as an ingredient of the mixture. The boron ingredient may include at least one selected from the group consisting of $H_3BO_3$, $HBO_2$, $B_2O_3$, $C_6H_5B(OH)_2$, $(C_6H_5O)_3B$, $[CH_3(CH_2)_3O]_3B$, $C_{13}H_{19}BO_3$, $C_3H_9B_3O_6$ and $(C_3H_7)_3B$. As used herein, 'boron ingredient' refers to any ingredient containing boron.

In the method for preparing a positive electrode active material as defined in the above embodiment, the boron ingredient may include boric acid ($H_3BO_3$).

The method for preparing a positive electrode active material as defined in the above embodiment may include a step of firing the mixture at a firing temperature of 150-500°C.

## Advantageous Effects

According to the present disclosure, it is possible to provide a positive electrode active material for a lithium-ion secondary battery having excellent capacity characteristics and electrode resistance characteristics, a positive electrode active material slurry, a positive electrode, a lithium-ion secondary battery and a method for preparing a positive electrode active material.

## DESCRIPTION OF DRAWINGS

FIG. 1 illustrates a part of the spectrum of the positive electrode active material according to each of Example 1-1 and Comparative Examples 1-1, 2-1 and 3-1, as analyzed by X-ray photoelectron spectroscopy (XPS).

FIG. 2 illustrates a part of the spectrum of the positive electrode active material according to each of Example 1-1 and Comparative Examples 1-1, 2-1 and 3-1, as analyzed byXPS.

FIG. 3 illustrates a change in battery capacity during the $1^{st}$ to $50^{th}$ charge/discharge cycles in Examples 1-1 and 2, and Comparative Examples 1-1, 2-1, 3-1 and 4.

FIG. 4 illustrates a change in direct current resistance during the $1^{st}$ to $200^{th}$ charge/discharge cycles in Examples 1-1 and 2, and Comparative Examples 1-1, 2-1, 3-1 and 4.

FIG. 5 illustrates a change in battery capacity during the $1^{st}$ to $50^{th}$ charge/discharge cycles in Example 1-2 and Comparative Examples 1-2, 2-2 and 3-2.

FIG. 6 illustrates a change in direct current resistance during the 1st to 200th charge/discharge cycles in Example 1-2 and Comparative Examples 1-2, 2-2 and 3-2.

FIG. 7 illustrates a part of the spectrum of the positive electrode active material according to Reference Example 1, as analyzed by XPS.

## BEST MODE

Hereinafter, preferred embodiments of the present disclosure will be described in detail.

With reference to the problem of electrode resistance characteristics that may arise with providing high capacity to a lithium-ion secondary battery, exemplification will be made by a lithium-ion secondary battery using a nickel-rich lithium transition metal oxide as a positive electrode active material in the following description.

In a lithium nickel cobalt manganese ternary positive electrode active material, such as $Li_aNi_xCo_yMn_zO_2$, as a positive electrode material of a lithium-ion secondary battery, it is known that an increase in nickel content in the composition may assist providing the battery with high capacity. Actually, there is a continuous need for providing a lithium-ion secondary battery with high capacity in the market, and thus development of an Ni-rich positive electrode active material having high capacity per unit weight in an operating voltage range of 3.0-4.2V has been conducted actively as a substitute for conventionally used $LiCoO_2$. However, in such a lithium nickel cobalt manganese ternary positive electrode material, problems including gas generation at high temperature or degradation of stability in a charged state occur as the content of Ni increases, which becomes a serious problem in the actual application of the positive electrode material to a battery.

To solve the above-mentioned problems, there has been suggested a method for forming a coating film on the surfaces of positive electrode active material particles in order to inhibit gas generation or to realize stable cycle behaviors. However, in an Ni-rich positive electrode having a high Ni content, such coating film treatment significantly affects an increase in resistance component, and in some cases of such treatment, discharge capacity or rate characteristics may be degraded or cycle characteristics may be deteriorated. In this context, as disclosed in Patent Documents 1 and 2, methods of forming a boron-based coating film are known, but they are limited in terms of applicability to an Ni-rich positive electrode. Meanwhile, as disclosed in Patent Document 3, a method of further forming another coating film in addition to the boron-based coating film has been discussed. However, there may be a practical problem in that stacking of coating films causes an increase in electrode resistance. As such, in the active materials currently in use or development, there is a significant limitation in coating film technologies capable of balancing excellent capacity characteristics with electrode resistance characteristics.

The inventors of the present disclosure have found that when using a lithium transition metal oxide-containing positive electrode active material in a lithium-ion secondary battery, it is possible to obtain a lithium-ion secondary battery having excellent electrode resistance characteristics as well as excellent capacity characteristics by forming a coating portion containing iodine and boron on the surface of a core containing a lithium transition metal oxide. The present disclosure is based on this finding.

[Positive Electrode Active Material]

In one aspect of the present disclosure, there is provided a positive electrode active material including a core containing a lithium transition metal oxide, a coating portion at least partially covering the surface of the core and containing iodine and boron, wherein the spectrum of $I3d_{5/2}$ observed by X-ray photoelectron spectroscopy of the positive electrode active material has a peak at 622-626 eV, wherein the content of iodine is 0.001-5 parts by weight based on 100 parts by weight of lithium transition metal oxide, and wherein content of boron is 0.001-5 parts by weight based on 100 parts by weight of lithium transition metal oxide. Preferably, the positive electrode active material is a positive electrode active material for a lithium-ion secondary battery.

The positive electrode active material may include a lithium transition metal oxide capable of intercalation/-deintercalation of lithium, iodine and boron. The positive electrode active material may be in the form of particles having a core-shell structure formed by a core and a coating portion. The coating portion may totally cover the core or may partially cover the outer surface of the core. The coating portion may be interconnected as a whole or may have a plurality of island-like parts spaced apart from each other. The coating portion may cover a single core, or two or more cores.

(Core)

The core of the positive electrode active material includes a lithium transition metal oxide. For example, the core may be lithium transition metal oxide particles. Meanwhile, the core may include an ingredient other than the lithium transition metal oxide. The shape of the core is not particularly limited and may have an optional shape, such as a spherical, cuboid or polygonal shape. **In** addition, the particle shape is not particularly limited. For example, the core may be formed of

single particles, or may be formed of an aggregate, such as secondary particles formed by aggregation of primary particles. Although there is no particular limitation in the size of the core, the core may have a size of 0.01-30 $\mu m$, 0.1-10 $\mu m$, or the like.

For example, the core of the positive electrode active material may include a nickel-containing lithium transition metal oxide, preferably a nickel-rich lithium transition metal oxide. Herein, 'nickel-rich' refers to a content of nickel of 50 mol% or more based on the total content of transition metals. As described above, a nickel-rich lithium transition metal oxide containing 50 mol% or more of nickel is preferred in terms of inhibition of an increase in electrode resistance. Therefore, when using the positive electrode active material according to this embodiment, it is possible to improve electrode resistance characteristics (i.e. it is possible to reduce an increase in resistance), and thus it is possible to assist balancing of high capacity characteristics with improved electrode resistance characteristics of a lithium-ion secondary battery. For example, the core may include a lithium transition metal oxide containing nickel in an amount of 60 mol% or more, 70 mol% or more, 80 mol% or more, or 90 mol% or more, based on the total content of transition metals.

(Lithium Transition Metal Oxide)

Particular examples of the lithium transition metal oxide may include: lithium-manganese oxide (e.g. $LiMnO_2$, $LiMnO_3$, $LiMn_2O_3$, $LiMn_2O_4$, etc.); lithium-cobalt oxide (e.g. $LiCoO_2$, etc.); lithium-nickel oxide (e.g. $LiNiO_2$, etc.); lithium-copper oxide (e.g. $Li_2CuO_2$, etc.); lithium-vanadium oxide (e.g. $LiV_3O_8$, etc.); lithium-nickel-manganese oxide (e.g. $LiNi_{1-z}Mn_zO_2$ (0<z<1), $LiMn_{2-z}Ni_zO_4$(0<z<2), etc.); lithium-nickel-cobalt oxide (e.g. $LiNi_{1-y}Co_yO_2$ (0<y<1), etc.); lithium-manganese-cobalt oxide (e.g. $LiCo_{1-z}Mn_zO_2$ (0<z<1), $LiMn_{2-y}Co_yO_4$ (0<y<2), etc.); lithium-nickel-manganese-cobalt oxide (e.g. $Li(Ni_xCo_yMn_z)O_2$ (0<x<1, 0< y <1, 0< z <1, x+y+z=1), $Li(Ni_xCo_yMn_z)O_4$ (0<x<2, 0<y<2, 0<z<2, x+y+z=2), etc.); lithium-nickel-cobalt-metal (M) oxide (e.g. $Li(Ni_xCo_yMn_zM_w)O_2$ (wherein M is selected from the group consisting of Al, Fe, V, Cr, Ti, Ta, Mg and Mo, 0<x<1, 0<y<1, 0<z<1, 0<w<1, x+y+z+w=1), etc.); Li-excess solid solution positive electrode (e.g. $pLi_2MnO_3$-(1-p)$Li(Ni_xCo_yMn_z)O_2$ (0<x<1, 0<y<1, 0<z<1, x+y+z=1, 0< p <1); those compounds in which the transition metal elements are partially substituted with one or more metal elements; or the like. The positive electrode active material layer may include one or more compounds selected from the above-listed compounds, but is not limited thereto.

Particular examples of a nickel-rich lithium transition metal oxide effective for providing a battery with high capacity may include: $Li_aNiO_2$(0.5≤a≤1.5); $Li_a(Ni_xCo_yMn_z)O_2$(0.5≤a≤1.5, 0.5≤x<1, 0<y<0.5, 0<z<0.5, x+y+z=1); $Li_a(Ni_xCo_yMn_z)O_2$(0.7≤x<1, 0<y<0.3, 0<z<0.3, x+y+z=1); $Li_a(Ni_xCo_yMn_z)O_2$(0.8≤x<1, 0<y<0.2, 0<z<0.2, x+y+z=1); $Li_a(Ni_xCo_yMn_z)O_2$(0.9≤x<1, 0<y<0.1, 0<z<0.1, x+y+z=1); $Li_aNi_{1-y}Co_yO_2$(0.5≤a≤1.5, 0<y≤0.5); $Li_aNi_{1-z}Mn_zO_2$(0.5≤a≤1.5, 0<z≤0.5); $Li_a(Ni_xCo_yMn_z)O_4$(0.5≤a≤1.5, 1≤x<2, 0<y<1, 0<z<1, x+y+z=2); $Li_a(Ni_xCo_yM_w)O_2$(wherein M is one or more elements selected from the group consisting of Al, Fe, V, Cr, Ti, Ta, Mg, Mo, Zr, Zn, Ga and In, 0.5≤a≤1.5, 0.5≤x<1, 0<y<0.5, 0< w <0.5, x+y+w=1); $Li_a(Ni_xCo_yMn_zM_w)O_2$(wherein M is one or more elements selected from the group consisting of Al, Fe, V, Cr, Ti, Ta, Mg, Mo, Zr, Zn, Ga and In, 0.5≤a≤1.5, 0.5≤x<1, 0<y<0.5, 0<z<0.5, 0<w<0.5, x+y+z+w=1); those compounds in which the transition metal elements are partially substituted with one or more metal elements (e.g. one or more elements selected from Al, Fe, V, Cr, Ti, Ta, Mg, Mo, Zr, Zn, Ga and In); those compounds in which the oxygen atoms are partially substituted with one or more non-metal elements (e.g. one or more elements selected from P, F, S and N); or the like. The positive electrode active material may include one or more compounds selected from the above-listed compounds, but is not limited thereto. In addition, in the same particle, there may be a distribution in a degree of substitution from the inner part to the surface layer. Further, the particle may be surface-coated. For example, the surface may be coated with a metal oxide, a lithium transition metal oxide, a polymer, or the like, but is not limited thereto.

Particularly, in terms of improvement of the capacity characteristics and stability of a battery, preferred lithium transition metal oxides may include $Li_aNiO_2$, $Li_a(Ni_{0.5}Mn_yCo_z)O_2$ (y+z=0.5), $Li_a(Ni_{0.6}Mn_yCo_z)O_2$ (y+z=0.4), $Li_a(Ni_{0.7}Mn_yCo_z)O_2$ (y+z=0.3), $Li_a(Ni_{0.8}Mn_yCo_z)O_2$ (y+z=0.2), $Li_a(Ni_{0.8}Co_yMn_zAl_w)O_2$ (y+z+w=0.2), $Li_a(Ni_{0.85}Co_yMn_z)O_2$ (y+z=0.15), $Li_a(Ni_{0.85}Co_yMn_zAl_w)O_2$ (y+z+w=0.15), $Li_a(Ni_{0.9}Co_yMn_z)O_2$ (y+z=0.1), $Li_a(Ni_{0.9}Co_yMn_zAl_w)O_2$ (y+z+w=0.1), $Li_a(Ni_{0.9}Co_yMn_z)O_2$ (y+z=0.1), $Li_a(Ni_{0.95}Co_yMn_zAl_w)O_2$ (y+z+w=0.05), or the like. Herein, the range of 'a' values may satisfy the condition of 0.5≤a≤1.5, preferably 1.0≤a≤1.5.

More particularly, preferred are $LiNiO_2$, $Li(Ni_{0.5}Mn_{0.3}Co_{0.2})O_2$, $Li(Ni_{0.6}Mn_{0.2}Co_{0.2})O_2$, $Li(Ni_{0.7}Mn_{0.15}Co_{0.15})O_2$, $Li(Ni_{0.8}Mn_{0.1}Co_{0.1})O_2$, $Li(Ni_{0.8}Co_{0.15}Al_{0.05})O_2$, $Li(Ni_{0.8}Co_{0.1}Mn_{0.05}Al_{0.058})O_2$, $Li(Ni_{0.85}Co_{0.10}Mn_{0.05})O_2$, $Li(Ni_{0.85}Co_{0.10}Mn_{0.03}Al_{0.02})O_2$, $Li(Ni_{0.9}Co_{0.05}Mn_{0.05})O_2$, $Li(Ni_{0.9}Co_{0.05}Al_{0.05})O_2$, $Li(Ni_{0.95}Co_{0.03}Mn_{0.02})O_2$, $Li(Ni_{0.95}Co_{0.03}Al_{0.02})O_2$, or the like.

(Coating Portion)

The coating portion of the positive electrode active material partially or totally covers the core surface. The coating portion includes iodine and boron. The coating portion is obtained by mixing a lithium transition metal oxide, an iodine ingredient and a boron ingredient and firing the resultant mixture. The coating portion of the positive electrode active material may be present independently from the lithium transition metal oxide-containing core, or may be at least partially

bound chemically or physically to the surfaces of lithium transition metal oxide particles forming the core. Preferably, the coating portion is at least partially in contact with the lithium transition metal oxide particles. The coating portion may be at least partially contained in the structure of lithium transition metal oxide. Meanwhile, the ingredients of the coating portion are not limited to chemical species independent as a compound but may include any chemical species, such as an ion, atom or atomic group. Although the thickness of the coating portion is not particularly limited, the core surface is limited in electrical conductivity when the coating portion totally covers the cores surface or has a large thickness. Therefore, the thickness of the coating portion is preferably 0.1-10 nm, and more preferably 3-5 nm. In addition, it is effective to use carbon nanotubes with which particles are interconnected, or the like, in order to inhibit degradation of the electrical conductivity.

For example, the content of the coating portion in the positive electrode active material may be 0.001-10.0 wt%, preferably 0.01-1.0 wt%, more preferably 0.02-0.5 wt%, and even more preferably 0.05-0.2 wt%. When the content of the coating portion is 0.001 wt% or more, it is expected that the cycle characteristics or electrode resistance characteristics of a battery are improved.

(Iodine Ingredient)

The coating portion in the positive electrode active material after firing includes iodine having a positive oxidation number. For example, the coating portion includes iodine having an oxidation number of +1 to +7, preferably includes iodine having an oxidation number of +2 to +7, more preferably includes iodine having an oxidation number of +5 to +7, and even more preferably includes iodine having an oxidation number of +7. Iodine having a positive oxidation number frequently has strong oxidizing power. For example, iodine compounds having a positive oxidation number include iodic acid, such as iodic acid ($HIO_3$), meta-periodic acid ($HIO_4$) or ortho-periodic acid ($H_5IO_6$); iodate, such as lithium iodate ($LiIO_3$), sodium iodate ($NaIO_3$), potassium iodate ($KIO_3$), ammonium iodate ($NH_4IO_3$), lithium periodate ($LiIO_4$), sodium periodate ($NaIO_4$) or potassium periodate ($KIO_4$); iodine oxide, such as iodine (IV) oxide ($I_2O_4$), iodine (V) oxide ($I_2O_5$) or iodine (IV, V) oxide($I_4O_9$); or the like. The coating portion may include periodate ion or hydroperiodate ion. Periodate ion may include meta-periodate ion ($IO_4^-$), ortho-periodate ion ($IO_6^{5-}$), or the like, and hydroperiodate ions may include $HIO_6^{4-}$, $H_2IO_6^{3-}$, $H_3IO_6^{2-}$, $H_4IO_6^-$, or the like. In addition, iodine contained in the coating portion may be bound to the element (lithium, transition metal, oxygen, or the like) forming the lithium transition metal oxide, or to boron. For example, the coating portion may include iodate ion ($IO_3^-$) or periodate ion bound with the metal ion of the lithium transition metal oxide. For example, the coating portion may include the binding of a metal cation of lithium transition metal oxide, or the like, with periodate ion, particularly, the binding of a metal cation with periodate ion ($IO_4^-$).

In the positive electrode active material, the content of iodine based on 100 parts by weight of lithium transition metal oxide is 0.001-5 parts by weight. When the content of iodine is 0.001 parts by weight or more, it is expected that the electrode resistance characteristics or cycle characteristics of a battery are improved. When the content of iodine is 5 parts by weight or less, it is thought that side reactions caused by excessive coating are inhibited. The content of iodine based on 100 parts by weight of lithium transition metal oxide is preferably 0.005-2 parts by weight, more preferably 0.01-1 parts by weight, and even more preferably 0.05-0.5 parts by weight.

(Boron Ingredient)

The coating portion in the positive electrode active material after firing includes boron having an oxidation number of +3. For example, the boron compound contained in the coating portion include boric acid, borate, polyboric acid, polyborate, boron oxide, or the like. Boron contained in the coating portion may be bound with the element (lithium, transition metal, oxygen, or the like) of the lithium transition metal oxide, or with iodine. For example, the coating portion may include borate ion (herein, $BO_3^{3-}$, $HBO_3^{2-}$ and $H_2BO_3^-$ are generally referred to as 'borate ion') bound with the metal ion of lithium transition metal oxide. For example, the coating portion may include the binding of the metal cation of lithium transition metal oxide, or the like, with borate ion. For example, the coating portion may include lithium meta-borate ($LiBO_2$). In addition, Patent Document 1 suggests that boric acid reacts with the remaining lithium to form lithium borate.

In the positive electrode active material, the content of boron based on 100 parts by weight of lithium transition metal oxide is 0.001-5 parts by weight. When the content of boron is 0.001 parts by weight or more, it is expected that the capacity characteristics or cycle characteristics of a battery are improved. When the content of boron is 5 parts by weight or less, it is thought that side reactions caused by excessive coating are inhibited. The content of boron based on 100 parts by weight of lithium transition metal oxide is preferably 0.01-3 parts by weight, more preferably 0.05-2 parts by weight, and even more preferably 0.1-1 parts by weight.

(XPS Spectrum of Positive Electrode Active Material)

The spectrum of the positive electrode active material observed by X-ray photoelectron spectroscopy (XPS) has a peak derived from $I3d_{5/2}$ electron of iodine. When charge correction is made with the energy of C1s peak top derived from

-$(CH_2)_n$- of 284.6 eV, the spectrum of $I3d_{5/2}$ has a peak at 622-626 eV. The peak location is preferably 623-625 eV, and more preferably 623.5-624.5 eV. Herein, 'peak location' refers to the location (energy) of the peak maximum value. The peak is derived from iodine having a positive oxidation number. For example, the peak is derived from iodine having an oxidation number of +1 to +7, preferably from iodine having an oxidation number of +3 to +7, more preferably from iodine having an oxidation number of +5 to +7, and even more preferably from iodine having an oxidation number of +7.

The spectrum of the positive electrode active material observed by X-ray photoelectron spectroscopy (XPS) has a peak derived from B1s electron of boron. For example, when charge correction is made with the energy of C1s peak top derived from - $(CH_2)_n$- of 284.6 eV, the spectrum of B1s electron of boron has a peak at 188.5-195.0 eV.

It is thought that the coating portion improves the capacity characteristics and electrode resistance characteristics of a battery and inhibits degradation of cycle characteristics by the following mechanism. However, the following mechanism is merely an exemplary supposition assisting the understanding of the present disclosure, and the scope of the present disclosure is not limited thereto.

It is thought that once the lithium transition metal oxide, iodine ingredient and boron ingredient are mixed and fired, the iodine ingredient and boron ingredient cause a chemical reaction, individually or in cooperation with each other, on the lithium transition metal oxide to form a coating portion containing iodine and boron, but the details are not clear. Although the details of the function of the coating portion in the positive electrode active material are not clear, the coating portion formed as mentioned above may contain iodine having a positive oxidation number and strong electron attraction force as described above. According to the knowledge of the related art, it is known that electrons are drawn to highly electronegative I by mixing a solid electrolyte with LiI, thereby improving the ion conductivity of Li. From this, it is thought that Li has improved conductivity by the coating portion during charge, thereby accelerating the redox reaction of the positive electrode active material. As a result, it is thought that side reactions, such as decomposition of an electrolyte, generated during charge are inhibited, and thus an increase in electrode resistance at the positive electrode is inhibited, resulting in stable long-term cycle characteristics.

In addition, it is thought that the coating portion at least partially covers the surface of the core containing a lithium transition metal oxide. Since the coating portion inhibits a chemical reaction of the lithium transition metal oxide with the electrolyte to inhibit formation of side reaction products, it is thought that adverse effects, such as formation of side reaction products on the positive electrode active material during repetition of charge/discharge, leading to inhibition of cell reactions or an increase in electrical resistance of a battery, can be inhibited.

As described in the following Examples, it is shown that the electrode resistance tends to increase when a boron-derived coating film is formed. However, it is also shown that incorporation of iodine to the coating portion inhibits an increase in electrode resistance. It is possible to inhibit an increase in electrode resistance caused by the coating portion through the function of iodine, while realizing improvement and stabilization of battery performance by the coating portion. Meanwhile, it is not clear whether or not the boron-containing coating film and the iodine-containing coating film are formed individually and function independently from each other, or whether any interaction is present or not between boron and iodine.

Particularly, a nickel-rich lithium transition metal oxide is significantly affected by an increase in electrode resistance. In general, a metal oxide coating film of an insulator, such as $Al_2O_3$, is effective in the case of lithium cobalt oxide, or the like. However, in the case of Ni-containing layered compounds, such a metal oxide causes an increase in surface resistance and an increase in electrode resistance, and thus sufficient battery performance cannot be obtained frequently. Meanwhile, it is known that the effect of a boron coating film upon the surface resistance is lower as compared to a metal oxide and is effective even to an Ni-containing layered oxide material. However, in the case of a nickel-rich lithium transition metal oxide, it is affected by even a slight increase in resistance caused by boron, and thus there are times when sufficient battery performance may not be obtained. In this context, when forming a coating portion containing boron and iodine as mentioned above, it is possible to accomplish a balance of capacity characteristics with electrode resistance characteristics, even when using a nickel-rich lithium transition metal oxide easily affected by the electrode resistance. In general, a battery using a nickel-rich lithium transition metal oxide tends to have increased capacity, and thus there is an advantage in terms of providing a battery with high capacity.

[Method for Preparing Positive Electrode Active Material]

In another aspect of the present disclosure, there is provided a method for preparing a positive electrode active material, including the steps of: preparing a mixture including a lithium transition metal oxide, iodine and boron; and firing the resultant mixture.

(1) Mixing

In the mixing process, at least one lithium transition metal oxide, iodine ingredient and boron ingredient are mixed. For example, in the mixing process, all of the lithium transition metal oxide, iodine ingredient and boron ingredient

are mixed in a solid state. For example, a powdery lithium transition metal oxide, iodine ingredient and boron ingredient may be mixed to obtain a powdery mixture. Hereinafter, the resultant mixture is referred to as 'mixture before firing'. The mixing process is not particularly limited, and any known method may be used. The mixing step may be carried out in the air, or under the other atmosphere, such as inert atmosphere. In addition, any ingredient other than the lithium transition metal oxide, iodine ingredient and boron ingredient may be added. Since the ingredients are mixed in a solid state, the mixing process may be carried out in a simple manner so that it may be cost-efficient and amenable to mass production.

(Iodine Ingredient)

The iodine ingredient is an ingredient used to introduce iodine to the positive electrode active material. The iodine ingredient is preferably in a solid state at room temperature with a view to easy mixing with the lithium transition metal oxide. For example, the iodine ingredient may include at least one selected from the group consisting of simple substance iodine ($I_2$), lithium iodide (LiI), sodium iodide (NaI), potassium iodide (KI), iodoform ($CHI_3$), carbon tetraiodide ($CI_4$), ammonium iodide ($NH_4I$), iodic acid ($HIO_3$), lithium iodate ($LiIO_3$), sodium iodate ($NaIO_3$), potassium iodate ($KIO_3$), ammonium iodate ($NH_4IO_3$), meta-periodic acid ($HIO_4$), ortho-periodic acid ($H_5IO_6$), lithium periodate ($LiIO_4$), sodium periodate ($NaIO_4$), potassium periodate ($KIO_4$), iodine oxide (IV) ($I_2O_4$), iodine oxide (V) ($I_2O_5$) and iodine oxide (IV, V) ($I_4O_9$). Any iodine ingredient, such as metal iodide or iodine-containing organic compound, other than the above-listed ingredients may be used, as long as it does not adversely affect the characteristics of a battery. Meanwhile, the valence number of iodine in the iodine ingredient is not particularly limited.

(Boron Ingredient)

The boron ingredient is an ingredient used to introduce boron to the positive electrode active material. The boron ingredient is preferably in a solid state at room temperature with a view to easy mixing with the lithium transition metal oxide. For example, the boron ingredient may include at least one selected from the group consisting of $H_3BO_3$, $HBO_2$, $B_2O_3$, $C_6H_5B(OH)_2$, $(C_6H_5O)_3B$, $[CH_3(CH_2)_3O]_3B$, $C_{13}H_{19}BO_3$, $C_3H_9B_3O_6$ and $(C_3H_7O)_3B$. Any boron ingredient, such as metal boride, other than the above-listed ingredients may be used, as long as it does not adversely affect the characteristics of a battery. Meanwhile, the valence number of boron in the boron ingredient is not particularly limited.

For example, the amount of lithium transition metal oxide added in the mixing process is 85-99.98 parts by weight, preferably 90-99.9 parts by weight, and more preferably 95-99.5 parts by weight, based on 100 parts by weight of the total weight of the mixture before firing.

For example, the amount of iodine ingredient added in the mixing process is 0.001-5 parts by weight, preferably 0.01-4 parts by weight, more preferably 0.05-3 parts by weight, and even more preferably 0.1-2 parts by weight, based on 100 parts by weight of the total weight of the mixture before firing. When the added amount of iodine ingredient is 0.001 parts by weight or more, it is expected that the electrode resistance characteristics or cycle characteristics of a battery are improved. When the added amount of iodine is 5 parts by weight or less, it is thought that excessive side reactions are inhibited.

For example, the amount of boron ingredient added in the mixing process is 0.01-5 parts by weight, preferably 0.05-4 parts by weight, more preferably 0.1-3 parts by weight, and even more preferably 0.5-2 parts by weight, based on 100 parts by weight of the total weight of the mixture before firing. When the added amount of boron ingredient is 0.01 parts by weight or more, it is expected that the electrode resistance characteristics or cycle characteristics of a battery are improved. When the added amount of boron is 5 parts by weight or less, it is thought that excessive side reactions are inhibited.

(2) Firing

In the firing process, the mixture before firing, obtained from the mixing process, is fired to obtain a positive electrode active material. The firing process is carried out preferably in the presence of oxygen, more preferably under ambient atmosphere, but may be carried out under any atmosphere other than the above. For example, the firing process may be carried out under inert atmosphere, such as nitrogen atmosphere or rare gas atmosphere including argon atmosphere. When the firing is carried out under the ambient atmosphere, the firing step may be carried out in a simple manner, and thus is cost-efficient and amenable to mass production.

For example, the firing temperature at which the mixture is fired may be 150-500°C, preferably 200-450°C, more preferably 250-400°C, and even more preferably 300-350°C. When the firing temperature is 150°C or higher, it is thought that the reaction of iodine ingredient and boron ingredient may be accelerated. In addition, when the firing temperature is 500°C or lower, excessive formation of side reaction products may be inhibited. In addition, the firing temperature at which the mixture is fired is preferably equal to or higher than the melting point of iodine ingredient and boron ingredient, and is more preferably equal to or higher than the boiling point of iodine ingredient and boron ingredient.

For example, the firing time during which the mixture is maintained at the firing temperature may be 1-12 hours, preferably 1-9 hours, more preferably 1.5-6 hours, and even more preferably 2-5 hours. When the firing time is 1 hour or more, it is thought that the iodine ingredient and boron ingredient may be allowed to react within a desired range. In addition, when the firing time is 12 hours or less, the firing is not carried out for an excessively long time, and thus it is possible to inhibit an increase in cost.

[Positive Electrode Active Material Slurry]

In still another aspect of the present disclosure, there is provided positive electrode active material slurry for a lithium-ion secondary battery, including the above-described positive electrode active material. For example, the positive electrode active material slurry includes a positive electrode active material, a conductive material, a binder and a solvent.

The content of the positive electrode active material contained in the positive electrode active material layer may be 80-99.5 wt% based on the total weight of the positive electrode active material layer. Preferably, the content of the positive electrode active material may be 85-98.5 wt% based on the total weight of the positive electrode active material layer. When the content of the positive electrode active material falls within the above-defined range, it is possible to realize excellent capacity characteristics. However, when the content of the positive electrode active material is less than the above-defined range, the coating amount on the positive electrode is increased to cause an increase in thickness, and thus it is likely that sufficient volume energy density cannot be accomplished. When the content of the positive electrode active material exceeds the above-defined range, the binder and conductive material are insufficient, resulting in degradation of the conductivity and adhesion of the electrode and degradation of the battery performance.

(Conductive Material)

The conductive material is not particularly limited, as long as it is an electrically conductive material causing no chemical change in the corresponding battery. Particular examples of the conductive material include, but are not limited to: a carbonaceous material, such as artificial graphite, natural graphite, carbon black, acetylene black, Ketjen black, denka black, thermal black, channel black, furnace black, lamp black or carbon nanotubes, carbon fibers, or the like; metal powder or metal fibers, such as aluminum, tin, bismuth, silicon, antimony, nickel, copper, titanium, vanadium, chromium, manganese, iron, cobalt, zinc, molybdenum, tungsten, silver, gold, lanthanum, ruthenium, platinum, iridium, or the like; conductive whisker, such as zinc oxide or potassium titanate; conductive metal oxide, such as titanium oxide; conductive polymers, such as polyaniline, polythiophene, polyacetylene, polypyrrole, polyphenylene derivatives, or the like. Such conductive materials may be used alone or in combination.

As described in the following Examples, when using carbon nanotubes as a conductive material, the impedance of the electrode may be reduced significantly. For this, the positive electrode active material slurry preferably includes carbon nanotubes.

The content of conductive material may be 0.1-30 wt% based on the total weight of the positive electrode active material layer. The content of conductive material may be preferably 0.5-15 wt%, more preferably 0.5-5 wt%, based on the total weight of the positive electrode active material layer. When the content of conductive material satisfies the above-defined range, it is possible to impart sufficient conductivity, and to ensure the battery capacity, since the content of the positive electrode active material is not reduced.

(Binder)

The binder is an ingredient that assists the binding of the active material with the conductive material and the binding with a current collector. Particular examples of the binder include, but are not limited to: polyvinylidene fluoride (PVDF), polyvinyl alcohol (PVA), polyacrylonitrile, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene terpolymer (EPDM), sulfonated EPDM, styrene butadiene rubber (SBR), fluororubber, various copolymers thereof, or the like. Such binders may be used alone or in combination.

The content of binder may be 0.1-30 wt% based on the total weight of the positive electrode active material layer. The content of binder may be preferably 0.5-15 wt%, more preferably 0.5-5 wt%, based on the total weight of the positive electrode active material layer. When the content of binder polymer satisfies the above-defined range, it is possible to impart sufficient adhesion to the electrode, while preventing degradation of the capacity characteristics of a battery.

(Solvent)

The solvent used for the positive electrode active material slurry is not particularly limited, as long as it is one used conventionally for manufacturing a positive electrode. Particular examples of the solvent include, but are not limited to:

amine-based solvents, such as N,N-dimethylaminopropylamine, diethylene triamine, N,N-dimethylformamide (DMF), or the like; ether-based solvents, such as tetrahydrofuran; ketone-based solvents, such as methyl ethyl ketone; ester-based solvents, such as methyl acetate; amide-based solvents, such as dimethyl acetamide, 1-methyl-2-pyrrolidone (NMP), or the like; dimethyl sulfoxide (DMSO); water; or the like. Such solvents may be used alone or in combination.

The solvent may be used in such an amount that it may provide a viscosity with which the slurry may show an excellent level of thickness uniformity upon the application thereof to a positive electrode current collector, while the positive electrode active material, the conductive material and the binder are dissolved or dispersed, considering the coating thickness or production yield of a slurry.

[Method for Preparing Positive Electrode Active Material Slurry]

The positive electrode active material slurry is obtained by adding the conductive material, binder, solvent, or the like, to the above-described positive electrode active material, followed by mixing. If necessary, other additives, such as a dispersant and thickener, may be added.

[Positive Electrode]

In still another aspect of the present disclosure, there is provided a positive electrode for a lithium-ion secondary battery, including a positive electrode active material layer containing the above-described positive electrode active material and formed on a current collector. In other words, the positive electrode includes a positive electrode current collector, and a positive electrode active material layer formed on one surface or both surfaces of the positive electrode current collector. The positive electrode active material layer may be formed totally or partially on the surface of the positive electrode current collector. For example, the positive electrode is a positive electrode for an electrolyte-containing lithium-ion secondary battery.

(Positive Electrode Current Collector)

The positive electrode current collector used for the positive electrode is not particularly limited, as long as it may be used electrochemically stably and has conductivity. Particular examples of the positive electrode current collector include: stainless steel; aluminum; nickel; titanium; or alloys thereof, combinations thereof or mixtures thereof. In addition, baked carbon, or aluminum or stainless steel surface-treated with carbon, nickel, titanium, silver, etc. may also be used.

The positive electrode current collector may have a thickness of 3-500 μm. Fine surface irregularities may be formed on the surface of the positive electrode current collector to enhance the adhesion to the positive electrode active material. For example, the positive electrode current collector may have various shapes, such as a film, a sheet, a foil, a net, a porous body, a foam or non-woven web body, etc.

(Positive Electrode Active Material Layer)

The positive electrode active material layer includes the above-described positive electrode active material, conductive material and binder. For example, the positive electrode active material layer may have a thickness of 1 nm to 100 μm, 10 nm to 10 μm, or 100 nm to 1 μm. The positive electrode active material layer may be formed directly on the positive electrode current collector, or may be formed with another layer interposed between the positive electrode active material layer and the positive electrode current collector. In addition, an additional layer, such as a protective film, may be formed on the positive electrode active material layer.

The positive electrode active material layer may include a conductive material including carbon nanotubes. **In** this case, the electrode impedance may be reduced significantly, and thus the electrode resistance characteristics may be improved.

[Method For Manufacturing Positive Electrode]

A positive electrode including a positive electrode active material layer formed on a positive electrode current collector may be obtained by applying the positive electrode active material slurry to the positive electrode current collector, and carrying out drying and pressing.

**In** a variant, the positive electrode may be obtained by casting the positive electrode active material slurry onto another support and peeling the positive electrode active material slurry from the support to obtain a film, and then laminating the film on the positive electrode current collector. **In** addition, other optional methods may be used to form a positive electrode active material layer on a positive electrode current collector.

[Lithium-Ion Secondary Battery]

**In** yet another aspect of the present disclosure, there is provided a lithium-ion secondary battery including the positive electrode. For example, the lithium-ion secondary battery includes a positive electrode, a negative electrode, a separator interposed between the positive electrode and the negative electrode, and a non-aqueous electrolyte. Meanwhile, when using a solid electrolyte as a non-aqueous electrolyte, the separator may be omitted. The lithium-ion secondary battery may optionally include a battery casing configured to receive an electrode assembly including the positive electrode, negative electrode and separator, and a sealing member configured to seal the battery casing.

[Negative Electrode]

In the lithium-ion secondary battery as defined in the above-described embodiment, the negative electrode includes a negative electrode current collector and a negative electrode active material layer formed on one surface or both surfaces of the negative electrode current collector. The negative electrode material layer may be formed totally or partially on the surface of the negative electrode current collector.

(Negative Electrode Current Collector)

The negative electrode current collector used for the negative electrode is not particularly limited, as long as it may be used electrochemically stably and has conductivity. Particular examples of the negative electrode current collector include: copper; stainless steel; aluminum; nickel; titanium; baked carbon; copper or stainless steel surface-treated with carbon, nickel, titanium, silver, etc.; aluminum-cadmium alloy; or the like.

The negative electrode current collector may have a thickness of 3-500 μm. Fine surface irregularities may be formed on the surface of the negative electrode current collector to enhance the adhesion to the negative electrode active material. For example, the negative electrode current collector may have various shapes, such as a film, a sheet, a foil, a net, a porous body, a foam or non-woven web body, etc.

(Negative Electrode Active Material Layer)

The negative electrode active material layer includes a negative electrode active material, a conductive material and a binder. For example, the negative electrode active material layer may have a thickness of 1 nm to 100 μm, 10 nm to 10 μm, or 100 nm to 1 μm. The negative electrode active material layer may be formed directly on the negative electrode current collector, or may be formed with another layer interposed between the negative electrode active material layer and the negative electrode current collector. In addition, an additional layer, such as a protective film, may be formed on the negative electrode active material layer.

For example, the negative electrode active material layer may be formed by applying a negative electrode active material slurry including a mixture of a negative electrode active material, a binder and a conductive material, dissolved or dispersed in a solvent, to a negative electrode current collector, and carrying out drying and pressing. If necessary, the mixture may further include a dispersant, a filler or other optional additives.

(Negative Electrode Active Material)

The negative electrode active material may include a compound capable of reversible lithium-ion intercalation/deintercalation. Particular examples of the negative electrode active material include, but are not limited to: carbonaceous materials, such as artificial graphite, natural graphite, graphitized carbon fibers and amorphous carbon; silicon-based materials, such as silicon powder, amorphous silicon, silicon nanofibers and silicon nanowires; silicon compounds, such as silicon alloys, silicon oxides, and alkali metal- or alkaline earth metal-doped silicon oxides; metallic materials capable of alloying with lithium, such as Al, Sn, Pb, Zn, Bi, In, Mg, Ga, Cd, Sn alloys, Al alloys, or the like; metal oxides capable of lithium doping/dedoping, such as $SnO_2$, vanadium oxides and lithium vanadium oxides; composites of a silicon-based material with a carbonaceous material or other composites, such as Sn-C composite; or the like. Such negative electrode active materials may be used alone or in combination. Meanwhile, the carbonaceous materials may include low-crystallinity carbon or high-crystallinity carbon. Low-crystallinity carbon include soft carbon and hard carbon. High-crystallinity carbon include amorphous, sheet-like, flake-like, spherical or fibrous natural graphite or artificial graphite, kish graphite, pyrolyzed carbon, mesophase pitch-based carbon fibers, mesocarbon microbeads, mesophase pitch, high temperature-fired carbon, such as petroleum/coal-based cokes.

The negative electrode active material may be used in an amount of 80-99 wt% based on the total weight of the negative electrode active material layer.

(Binder and Conductive Material)

The types and contents of the binder and conductive material used for the negative electrode slurry may be the same as described above with reference to the positive electrode.

(Solvent)

The solvent used for negative electrode slurry is not particularly limited, as long as it is used conventionally for manufacturing a negative electrode. Particular examples of the solvent include, but are not limited to: N-methyl-2-pyrrolidone (NMP), dimethyl sulfoxide (DMSO), isopropyl alcohol, acetone, water, or the like. Such solvents may be used alone or in combination.

[Method for Manufacturing Negative Electrode]

The method for manufacturing the negative electrode for a lithium-ion secondary battery according to an embodiment of the present disclosure may include the steps of: dissolving or dispersing a negative electrode active material optionally with a binder, a conductive material, or the like, in a solvent to obtain a negative electrode slurry; and forming a negative electrode active material layer on a negative electrode current collector, for example, by applying the negative electrode slurry to a negative electrode current collector to obtain a negative electrode, similarly to the method for manufacturing a positive electrode.

[Separator]

**In** the lithium-ion secondary battery according to an embodiment of the present disclosure, the separator functions to separate the negative electrode and the positive electrode from each other and to provide a lithium-ion transport channel. Any separator may be used with no particular limitation, as long as it is used conventionally as a separator for a lithium-ion secondary battery. Particularly, the separator preferably shows low resistance against electrolyte ion migration and high wettability with an electrolyte. Particular examples of the separator may include a porous polymer film, such as a porous polymer film made of a polyolefin-based polymer, including ethylene homopolymer, propylene homopolymer, ethylene/butene copolymer, ethylene/hexene copolymer or ethylene/methacrylate copolymer, or a laminate having two or more layers of such porous polymer films. **In** addition, a conventional porous non-woven web, such as a non-woven web made of high-melting point glass fibers, polyethylene terephthalate fibers, or the like, may be used. Further, a separator coated with a ceramic ingredient or polymer material in order to ensure heat resistance or mechanical strength may be used.

[Non-Aqueous Electrolyte]

**In** the lithium-ion secondary battery according to an embodiment of the present disclosure, the non-aqueous electrolyte may include an organic liquid electrolyte, inorganic liquid electrolyte, or the like, which may be used for manufacturing a secondary battery, but is not limited thereto. For example, a solid electrolyte may be used.

The non-aqueous electrolyte may include an organic solvent and a lithium salt, and may further include additives, if necessary. Hereinafter, the liquid electrolyte is also referred to as 'electrolyte'.

The organic solvent is not particularly limited, as long as it can function as a medium through which ions participating in the electrochemical reactions of a battery can be transported. Particular examples of the organic solvent include, but are not limited to: ester-based solvents, such as methyl acetate, ethyl acetate, $\gamma$-butyrolactone and $\varepsilon$-caprolactone; ether-based solvents, such as dibutyl ether and tetrahydrofuran; ketone-based solvents, such as cyclohexanone; aromatic hydrocarbon-based solvents, such as benzene and fluorobenzene; carbonate-based solvents, such as dimethyl carbonate (DMC), diethyl carbonate (DEC), methyl ethyl carbonate (MEC), ethyl methyl carbonate (EMC), ethylene carbonate (EC) and propylene carbonate (PC); alcohol-based solvents, such as ethyl alcohol and isopropyl alcohol; nitrile-based solvents, such as R-CN (wherein R is a C2-C20 linear, branched or cyclic hydrocarbon group, which may optionally include a double bonded aromatic ring or ether bond); amide-based solvents, such as dimethyl formamide; dioxolane-based solvents, such as 1,3-dioxolan; sulforane-based solvents, or the like. Such solvents may be used alone or in combination. Particularly, carbonate-based solvents are preferred. In addition, more preferred is a mixture capable of enhancing the charge/discharge characteristics of a battery, wherein the mixture includes a cyclic carbonate (e.g. ethylene carbonate or propylene carbonate) having high ion conductivity and high dielectric constant and a low-viscosity linear carbonate-based compound (e.g. ethyl methyl carbonate, dimethyl carbonate or diethyl carbonate). In this case, when mixing the cyclic carbonate with the linear carbonate at a volume ratio of about 1:1-1:9, it is possible to realize excellent electrolyte quality.

The lithium salt is not particularly limited, as long as it is a compound capable of providing lithium ions used in a lithium-ion secondary battery. Particular examples of the lithium salt include, but are not limited to: $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, $LiB(C_2O_4)_2$, or the like. Such lithium salts may be used alone or in combination. For example, the lithium salt may be present in the electrolyte at a concentration of 0.1-2 mol/L. When the concentration of the lithium salt falls within the above-defined range, the electrolyte has suitable conductivity and viscosity and shows excellent electrolyte quality, and thus lithium ions can be transported effectively.

Electrolyte additives may be used optionally in order to improve the life characteristics of a battery, to inhibit degradation of the capacity of a battery and to improve the discharge capacity of a battery. Particular examples of the additives include, but are not limited to: haloalkylene carbonate-based compounds, such as fluoroethylene carbonate (FEC) and difluoroethylene carbonate (DFEC); pyridine; triethyl phosphite; triethanolamine; cyclic ethers; ethylene diamine; n-glyme; triamidehexaphosphate; nitrobenzene derivatives; sulfur; quinonimine dyes; N-substituted oxazolidinone; N,N-substituted imidazolidine; ethylene glycol diallyl ether; ammonium salts; pyrrole; 2-methoxyethanol; aluminum trichloride, or the like. Such additives may be used alone or in combination. The additives may be used in an amount of 0.1-15 wt% based on the total weight of the electrolyte.

[Method for Manufacturing Lithium-Ion Secondary Battery]

The lithium-ion secondary battery according to an embodiment of the present disclosure may be obtained by interposing the separator and electrolyte between the positive electrode and the negative electrode obtained as described above. Particularly, the lithium-ion secondary battery may be obtained by disposing the separator between the positive electrode and the negative electrode to form an electrode assembly, introducing the electrode assembly to a battery casing, such as a cylindrical battery casing or prismatic battery casing, and injecting the electrolyte. **In** a variant, after stacking the electrode assembly, the electrolyte is injected thereto, and the resultant structure is introduced into a battery casing, followed by sealing.

The battery casing may be any one used conventionally in the art. For example, the shape of the battery casing may include a cylindrical shape using a can, a prismatic shape, a pouch-like shape or a coin-like shape.

The lithium-ion secondary battery according to an embodiment of the present disclosure may be used not only as a power source for a compact device but also as a unit cell of a medium- to large-size battery module including a plurality of battery cells. Preferred examples of such medium- to large-size devices include electric vehicles, hybrid electric vehicles, plug-in hybrid electric vehicles, power storage systems, or the like, but are not limited thereto.

MODE FOR DISCLOSURE

Hereinafter, the present disclosure will be explained in more detail with reference to examples and comparative examples.

[Example 1-1]

(Addition of Iodine and Boron)

First, 1.0 parts by weight of iodine simple substance powder ($I_2$, available from Fuji Film Wakou Pharmaceuticals) and 0.3 parts by weight of boric acid ($H_3BO_3$, available from Fuji Film Wakou Pharmaceuticals) were added to 100 parts by weight of $LiNi_{0.90}Co_{0.07}Mn_{0.03}O_2$ (also referred to as 'lithium transition metal oxide', hereinafter) powder, the resultant mixture was sealed in a plastic bottle, and the plastic bottle was shaken up and down in one's hand for about 1minute to mix the ingredients, thereby providing a mixture.

(Firing)

The resultant mixture was warmed to 350°C under ambient atmosphere, allowed to stand at 350°C for 5 hours to perform firing, and then was cooled to room temperature to obtain a positive electrode active material.

(Preparation of Positive Electrode Active Material Slurry)

Then, 1.5 parts by weight of carbon black as a conductive material and 2.0 parts by weight of polyvinylidene fluoride (PVDF) as a binder were added to and mixed with 96.5 parts by weight of the positive electrode active material together with N-methyl-2-pyrrolidone (NMP) as a solvent to obtain a positive electrode active material slurry.

(Manufacture of Positive Electrode Sheet)

After that, the resultant positive electrode active material slurry was applied to aluminum foil having a thickness of 20 μm to a thickness of about 70 μm and dried at 130°C to obtain a positive electrode sheet.

(Preparation of Electrolyte)

Ethylene carbonate, dimethyl carbonate and diethyl carbonate were mixed at a volume ratio of 1:2:1, and 2.0 wt% of vinylene carbonate (VC) was added thereto, while $LiPF_6$ was dissolved therein at a concentration of 1 mol/L, thereby preparing an electrolyte.

(Manufacture of Coin-Cell Battery)

The positive electrode sheet obtained as described above was punched into a circular shape having a diameter of 13 mm to prepare a positive electrode. Lithium metal having a thickness of 0.3 mm was used as a negative electrode, and the electrolyte prepared as described above was used to obtain a CR2016 type coin-cell battery.

(Manufacture of Mono-Cell Battery)

Separately from the coin-cell, the positive electrode sheet obtained as described about was punched into an square shape and used as a positive electrode, graphite with the corresponding size was used as a negative electrode, and the electrolyte prepared as described above was used to obtain a mono-cell battery.

[Example 1-2]

A coin-cell battery and a mono-cell battery were obtained in the same manner as Example 1-1, except that 1.5 parts by weight of a mixture of carbon black with carbon nanotubes was used as a conductive material instead of 1.5 parts by weight of carbon black.

[Example 2]

A coin-cell battery and a mono-cell battery were obtained in the same manner as Example 1-1, except that boric acid was added in an amount of 0.5 parts by weight.

[Comparative Example 1-1]

A coin-cell battery and a mono-cell battery were obtained in the same manner as Example 1-1, except that the step of adding iodine and boron and the firing step were not carried out. In other words, $LiNi_{0.90}Co_{0.07}Mn_{0.03}O_2$ itself was used as a positive electrode active material with no addition of iodine and boric acid.

[Comparative Example 1-2]

A coin-cell battery and a mono-cell battery were obtained in the same manner as Comparative Example 1-1, except that 1.5 parts by weight of a mixture of carbon black with carbon nanotubes was used as a conductive material instead of 1.5 parts by weight of carbon black.

[Comparative Example 2-1]

A coin-cell battery and a mono-cell battery were obtained in the same manner as Example 1-1, except that merely 1.0 parts by weight of iodine was added, and boric acid was not added.

[Comparative Example 2-2]

A coin-cell battery and a mono-cell battery were obtained in the same manner as Comparative Example 2-1, except that 1.5 parts by weight of a mixture of carbon black with carbon nanotubes was used as a conductive material instead of 1.5 parts by weight of carbon black.

[Comparative Example 3-1]

A coin-cell battery and a mono-cell battery were obtained in the same manner as Example 1-1, except that merely 0.3 parts by weight of boric acid was added, and iodine was not added.

[Comparative Example 3-2]

A coin-cell battery and a mono-cell battery were obtained in the same manner as Comparative Example 3-1, except that 1.5 parts by weight of a mixture of carbon black with carbon nanotubes was used as a conductive material instead of 1.5 parts by weight of carbon black.

[Comparative Example 4]

A coin-cell battery and a mono-cell battery were obtained in the same manner as Example 1-1, except that merely 0.5 parts by weight of boric acid was added, and iodine was not added.

The conditions used in each of Examples and Comparative Examples are shown in the following Table 1. The added amount of each of the positive electrode active material, conductive material and binder was expressed in the unit of parts by weight, and the added amount of each of the conductive material and binder was expressed as a value of parts by weight based on 96.5 parts by weight of the positive electrode active material.

[Table 1]

<table>
<tr><td colspan="2" rowspan="2"></td><td colspan="3">Examples</td><td colspan="7">Comparative Examples</td></tr>
<tr><td>1-1</td><td>1-2</td><td>2</td><td>1-1</td><td>1-2</td><td>2-1</td><td>2-2</td><td>3-1</td><td>3-2</td><td>4</td></tr>
<tr><td rowspan="3">Positive electrode active material</td><td>Lithium transition metal oxide</td><td>100</td><td>100</td><td>100</td><td>100</td><td>100</td><td>100</td><td>100</td><td>100</td><td>100</td><td>100</td></tr>
<tr><td>Iodine</td><td>1.0</td><td>1.0</td><td>1.0</td><td>0</td><td>0</td><td>1.0</td><td>1.0</td><td>0</td><td>0</td><td>0</td></tr>
<tr><td>Boric acid</td><td>0.3</td><td>0.3</td><td>0.5</td><td>0</td><td>0</td><td>0</td><td>0</td><td>0.3</td><td>0.3</td><td>0.5</td></tr>
<tr><td rowspan="2">Conductive material</td><td>Carbon black</td><td>1.5</td><td rowspan="2">1.5</td><td>1.5</td><td>1.5</td><td rowspan="2">1.5</td><td>1.5</td><td rowspan="2">1.5</td><td>1.5</td><td rowspan="2">1.5</td><td>1.5</td></tr>
<tr><td>CNT</td><td>0</td><td>0</td><td>0</td><td>0</td><td>0</td><td>0</td></tr>
<tr><td>Binder</td><td>PVDF</td><td>2.0</td><td>2.0</td><td>2.0</td><td>2.0</td><td>2.0</td><td>2.0</td><td>2.0</td><td>2.0</td><td>2.0</td><td>2.0</td></tr>
<tr><td colspan="2">Firing temperature</td><td colspan="3">350°C</td><td colspan="2" rowspan="2">No firing</td><td colspan="5">350°C</td></tr>
<tr><td colspan="2">Firing time</td><td colspan="3">5 hours</td><td colspan="5">5 hours</td></tr>
</table>

[Test Example 1: Elemental Analysis of Positive Electrode Active Material Based on X-ray Fluorescence Spectrometry]

The positive electrode active material obtained from each of Examples and Comparative Examples was subjected to elemental analysis based on X-ray fluorescence spectrometry (XRF). The XRF instrument is a scanning type X-ray fluorescence spectrometer (ZSX Primus II (available from Rigaku)). The sample to be analyzed by XRF is a solid-state positive electrode active material before preparing a positive electrode active material slurry. Each value obtained from Comparative Example 1-1, not subjected to coating treatment, is taken as a baseline, and each value obtained by subtracting the baseline from the measurement of each of Examples 1-1 and 2 is defined as each of the iodine content and boron content of each sample. The results are shown in the following Table 2. Meanwhile, since the detectivity to boron is low in X-ray fluorescence spectrometry, the value of boron content is a reference value.

[Table 2]

| | Iodine content | Boron content |
|---|---|---|
| Example 1-1 | 0.1006 wt% | 0.321 wt% |
| Example 2 | 0.125 wt% | 0.511 wt% |

[Test Example 2: X-ray Photoelectron Spectroscopy (XPS) Analysis of Positive Electrode Active Material]

Each of the positive electrode active materials obtained according to Example 1-1 and Comparative Example 1-1 was analyzed by X-ray photoelectron spectroscopy (XPS). The sample to be analyzed is a solid-state positive electrode active material obtained after firing and before preparing a positive electrode active material slurry. Charge correction was carried out with the $-(CH_2)_n-$ derived C1s peak top energy taken as 284.6 eV.

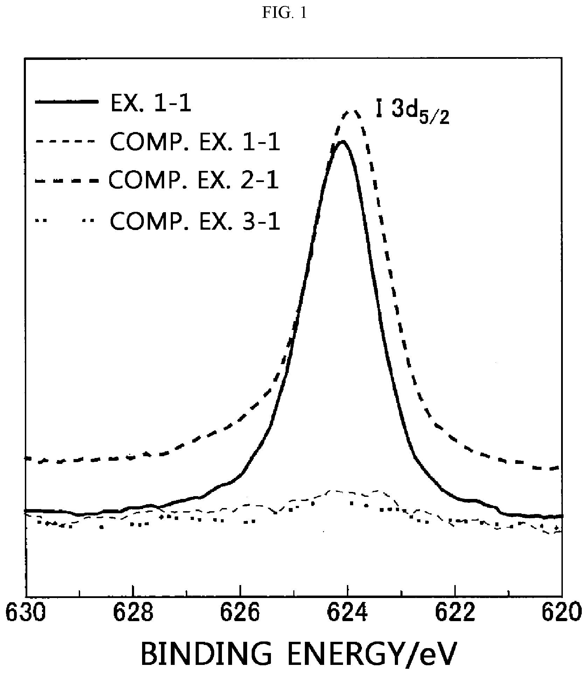

FIG. 1 illustrates a part of the XPS spectrum of Example 1-1 (solid line) and that of Comparative Example 1-1 (dotted line). In the case of the positive electrode active material according to Example 1-1, the iodine $3d_{5/2}$ electron-derived peak having a peak top at around 624 eV is observed in a range of 622-626 eV, while no peak is observed in the case of the positive electrode active material according to Comparative Example 1-1. The peak location is near the peak location of sodium iodate ($NaIO_3$) or lithium iodate ($LiIO_3$) containing iodine having an oxidation number of +5, sodium periodate ($NaIO_4$) or lithium periodate ($LiIO_4$) containing iodine having an oxidation number of +7, or the like. Therefore, it is thought that the positive electrode active material at least partially includes iodine having a positive oxidation number. Particularly, it is thought that iodine in the positive electrode active material is present at least partially in the form of iodate ion and/or periodate ion. Meanwhile, in the case of Example 1-1, no peak derived from iodine having an oxidation number of 0 or -1 is observed in a range of 618-620 eV.

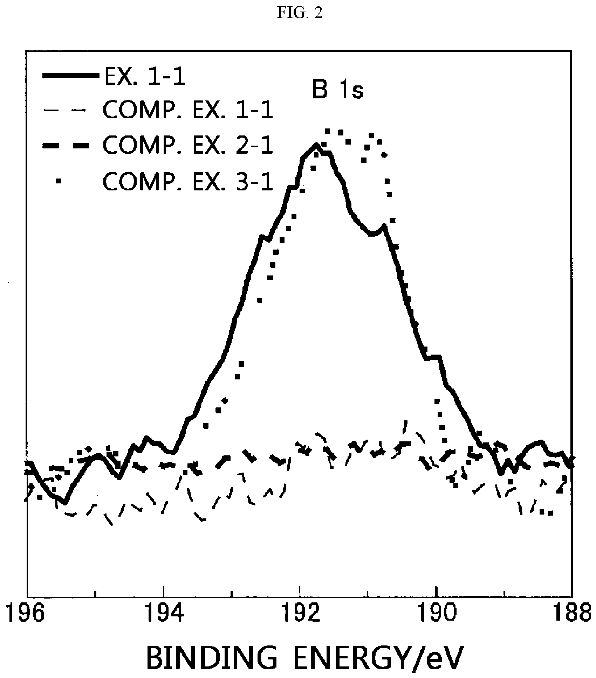

With reference to boron, as shown in FIG. 2, the boron B1s electron-derived peak having a peak top at around 191.5 eV is observed in a range of 195.0-188.5 eV, while no peak is observed in the case of the positive electrode active material according to Comparative Example 1-1. The peak location is near the peak location of lithium metaborate ($LiBO_2$). Therefore, it is thought that the positive electrode active material at least partially includes trivalent boron.

[Test Example 3-1: Initial Charge/Discharge Characteristics]

The coin-cell battery obtained according to each of Examples and Comparative Examples was subjected to charge/discharge cycles repeatedly in a thermostat maintained at 25°C or 45°C under the conditions of a charge cutoff voltage of 4.25V, discharge cutoff voltage of 3V, charge current rate of 0.3C and a discharge current rate of 0.3C. The charge capacity and discharge capacity at the first charge/discharge cycle were determined.

As shown in the following Formulae, the value of the charge capacity at the first charge/discharge cycle, divided by the weight of the positive electrode active material powder is defined as 'initial charge capacity'. In addition, the value of the discharge capacity at the first charge/discharge cycle, divided by the weight of the positive electrode active material powder is defined as 'initial discharge capacity'. Further, the ratio of the discharge capacity based on the charge capacity at the first charge/discharge cycle is defined as 'initial efficiency'. From the determined charge capacity and discharge capacity, the initial charge capacity, initial discharge capacity and initial efficiency at 25°C and the initial discharge capacity at 45°C were calculated.

Initial charge capacity (mAh/g)= Charge capacity (mAh) at 1$^{st}$ charge/discharge cycle/ weight (g) of positive electrode active material [Mathematical Formula 1]

Initial discharge capacity (mAh/g)= Discharge capacity (mAh) at 1$^{st}$ charge/discharge cycle/weight (g) of positive electrode active material [Mathematical Formula 2]

Initial efficiency (%)= Discharge capacity (mAh) at 1$^{st}$ charge/discharge cycle/Charge capacity (mAh) at 1$^{st}$ charge/discharge cycle [Mathematical Formula 3]

[Test Example 3-2: Direct Current Resistance (DCR) Characteristics]

The coin-cell battery obtained according to each of Examples and Comparative Examples was determined in terms of direct current resistance (DCR) value after the completion of charging at the 1$^{st}$ cycle and after the completion of charging at the 30$^{th}$ cycle. Particularly, the direct current resistance value was calculated from a gradient of the linear plotted by linear approximation of a discharge curve obtained by acquiring a voltage value at a predetermined interval for 60 seconds right after the initiation of discharging, after the fully charged state in which charging was completed. The direct current resistance after the completion of charging at the 1$^{st}$ cycle is defined as 'initial direct current resistance'. In addition, a ratio of direct current resistance defined by the following Formula was calculated.

Ratio of direct current resistance= Direct current resistance after completion of charging at 1$^{st}$ cycle/ Direct current resistance after completion of charging at 30$^{th}$ cycle [Mathematical Formula 4]

(Results of Examples and Comparative Examples with No Added Carbon Nanotubes)

The following Table 3 shows the results of Test Examples 3-1 and 3-2 for Examples 1-1 and 2, and Comparative Examples 1-1, 2-1, 3-1 and 4. The results in Table 3 include initial charge capacity, initial discharge capacity and initial efficiency at 25°C, initial discharge capacity at 45°C, and initial direct current resistance and a ratio of direct current resistance. It is to be noted that the results in Table 3 are described as relative values calculated by dividing actual values by the corresponding values of Comparative Example 1-1. In the columns of 'iodine' and 'boric acid', the parts by weight values of iodine and boric acid added based on 100 parts by weight of lithium transition metal oxide are described, respectively.

[Table 3]

| | Examples | | Comparative Examples | | | |
|---|---|---|---|---|---|---|
| | 1-1 | 2 | 1-1 | 2-1 | 3-1 | 4 |
| Iodine | 1.0 | 1.0 | - | 1.0 | - | - |
| Boric acid | 0.3 | 0.5 | - | - | 0.3 | 0.5 |
| CNT | Null | Null | Null | Null | Null | Null |
| Initial Charge Capacity (25°C) | 1.013 | 1.000 | 1 | 1.000 | 1.000 | 1.004 |
| Initial Discharge Capacity (25°C) | 1.019 | 1.009 | 1 | 1.000 | 1.000 | 1.005 |
| Initial Efficiency (25°C) | 1.009 | 1.009 | 1 | 0.999 | 0.998 | 0.999 |
| Initial Charge Capacity (45°C) | 1.013 | 1.000 | 1 | 1.000 | 1.000 | 1.004 |
| Initial Direct Current Resistance | 1.069 | 1.118 | 1 | 1.118 | 1.431 | 1.479 |
| Ratio of Direct Current Resistance | 0.902 | 0.942 | 1 | 0.936 | 1.341 | 1.312 |

As shown in Table 3, in terms of initial discharge capacity and initial efficiency, Comparative Example 2-1 in which only iodine is added and Comparative Example 3-1 in which only boric acid is added cannot provide any improvement as compared to Comparative Example 1-1 in which both iodine and boric acid are not added. Comparative Example 4 in which 0.5 parts by weight of boric acid is merely added shows a slight degree of improvement. Meanwhile, Examples 1-1 and 2 in which iodine and boric acid are added show significant improvement of initial discharge capacity and initial efficiency as compared to Comparative Example 4.

As shown in Table 3, in terms of initial direct current resistance, Comparative Examples 3-1 and 4 in which boric acid is added shows a significant increase in initial direct current resistance. On the contrary, Examples 1-1 and 2 in which iodine and boric acid are added inhibit an increase in initial direct current resistance as compared to Comparative Examples 3-1 and 4. Particularly, Example 1-1 inhibit an increase in initial direct current resistance as compared to Comparative Example 2-1 in which only iodine is added, and Example 2 also inhibit an increase in direct current resistance to the same level as Comparative Example 2-1.

(Results of Examples and Comparative Examples with Carbon Nanotubes Added)

The following Table 4 shows the results of Test Examples 3-1 and 3-2 for Examples 1-2 and Comparative Examples 1-2, 2-2 and 3-2. The results in Table 4 include initial charge capacity, initial discharge capacity and initial efficiency at 25°C, initial discharge capacity at 45°C, and initial direct current resistance and a ratio of direct current resistance. It is to be noted that the results in Table 4 are described as relative values calculated by dividing actual values by the corresponding values of Comparative Example 1-2. In the columns of 'iodine' and 'boric acid', the parts by weight values of iodine and boric acid added based on 100 parts by weight of lithium transition metal oxide are described, respectively.

[Table 4]

| | Example | Comparative Examples | | |
|---|---|---|---|---|
| | 1-2 | 1-2 | 2-2 | 3-2 |
| Iodine | 1.0 | - | 1.0 | - |
| Boric acid | 0.3 | - | - | 0.3 |

(continued)

| | Example | Comparative Examples | | |
|---|---|---|---|---|
| | 1-2 | 1-2 | 2-2 | 3-2 |
| CNT | Yes | Yes | Yes | Yes |
| Initial Charge Capacity (25°C) | 1.008 | 1 | 1.000 | 1.013 |
| Initial Discharge Capacity | 1.024 | 1 | 1.009 | 1.019 |
| (25°C) | | | | |
| Initial Efficiency (25°C) | 1.014 | 1 | 1.007 | 1.006 |
| Initial Charge Capacity (45°C) | 1.013 | 1 | 1.004 | 1.009 |
| Initial Direct Current Resistance | 1.102 | 1 | 1.175 | 1.453 |
| Ratio of Direct Current Resistance | 1.025 | 1 | 1.006 | 1.360 |

As shown in Table 4, in terms of initial discharge capacity and initial efficiency, Comparative Example 2-2 in which only iodine is added and Comparative Example 3-2 in which only boric acid is added shows a certain degree of improvement as compared to Comparative Example 1-1 in which both iodine and boric acid are not added. Meanwhile, Example 1-2 in which iodine and boric acid are added shows significant improvement of initial discharge capacity and initial efficiency as compared to Comparative Examples 2-2 and 3-2.

As shown in Table 4, in terms of initial direct current resistance, Comparative Example 3-2 in which boric acid is added shows a significant increase in initial direct current resistance, but Example 1-2 inhibits an increase in initial direct current resistance as compared to Comparative Example 3-2. In addition, Example 1-2 inhibits an increase in initial direct current resistance as compared to Comparative Example 2-1 in which only iodine is added.

It can be seen from the results of Test Examples 3-1 and 3-2 that addition of boric acid provides a tendency to increase initial capacity, initial efficiency and initial direct current resistance, while addition of iodine does not provide the same level of tendency to increase initial direct current resistance as addition of boric acid. Meanwhile, addition of both iodine and boric acid can increase initial capacity and initial efficiency, while inhibiting an increase in initial direct current resistance. Since the initial direct current resistance in the case of addition of iodine and boric acid is lower than the initial direct current resistance in the case of addition of iodine alone, it is suggested that such an increase in direct current resistance caused by boric acid is not inhibited simply by the addition of iodine. In other words, addition of both iodine and boric acid can provide a positive electrode active material showing higher quality in terms of both capacity characteristics and resistance characteristics as compared to the positive electrode active material using any one of iodine and boric acid.

[Test Example 4-1: Capacity Retention]

The mono-cell battery obtained according to each of Examples and Comparative Examples was aged at 25°C at a charge current rate of 0.1C and a discharge current rate of 0.1C. Next, the mono-cell battery was subjected to charge/discharge cycles repeatedly in a thermostat maintained at 45°C under the conditions of a charge cutoff voltage of 4.2V, discharge cutoff voltage of 2.5V, charge current rate of 0.3C and a discharge current rate of 0.3C. The capacity retention after repeating n times of charge/discharge cycles as defined according to the following Mathematical Formula 5 was calculated from the discharge capacity at each cycle of charge/discharge cycles:

Capacity retention (%)= {(Discharge capacity at $n^{th}$ charge/discharge cycle)/(Discharge capacity at $1^{st}$ charge/discharge cycle)} x 100% [Mathematical Formula 5]

[Test Example 4-2: Linear Resistance Increase]

In the same manner as Test Example 3-2, the value of direct current resistance of the mono-cell battery at each cycle of charge/discharge cycles was determined. A linear resistance increase at the $n^{th}$ charge/discharge cycle was calculated from the determined direct current resistance value. The linear resistance increase in each of Examples 1-1 and 2 and Comparative Examples 1-1, 2-1, 3-1 and 4 is defined according to the following Mathematical Formula 6. To facilitate comparison of a change in linear resistance of each of Examples and Comparative Example, normalization was carried out by taking the linear resistance increase of Comparative Example 1-1 at the $299^{th}$ cycle as reference.

Linear resistance increase (%)= [{(Linear resistance at $n^{th}$ charge/discharge cycle)/(Linear resistance at $1^{st}$ charge/discharge cycle)}/ {(Linear resistance of Comparative Example 1-1 at $299^{th}$ charge/discharge cycle)/ (Linear resistance of Comparative Example 1-1 at $1^{st}$ charge/discharge cycle)}] x 100% [Mathematical Formula 6]

The linear resistance increase in each of Example 1-2 and Comparative Examples 1-2, 2-2 and 3-2 is defined according to the following Mathematical Formula 7. To facilitate comparison of a change in linear resistance of each of Examples and Comparative Example, normalization was carried out by taking the linear resistance increase of Comparative Example 1-2 at the $299^{th}$ cycle as reference.

Linear resistance increase (%)= [{(Linear resistance at $n^{th}$ charge/discharge cycle)/ (Linear resistance at $1^{st}$ charge/discharge cycle)}/ {(Linear resistance of Comparative Example 1-2 at $299^{th}$ charge/discharge cycle)/ (Linear resistance of Comparative Example 1-2 at $1^{st}$ charge/discharge cycle)}] x 100% [Mathematical Formula 7]

(Results of Examples and Comparative Examples with No Added Carbon Nanotubes)

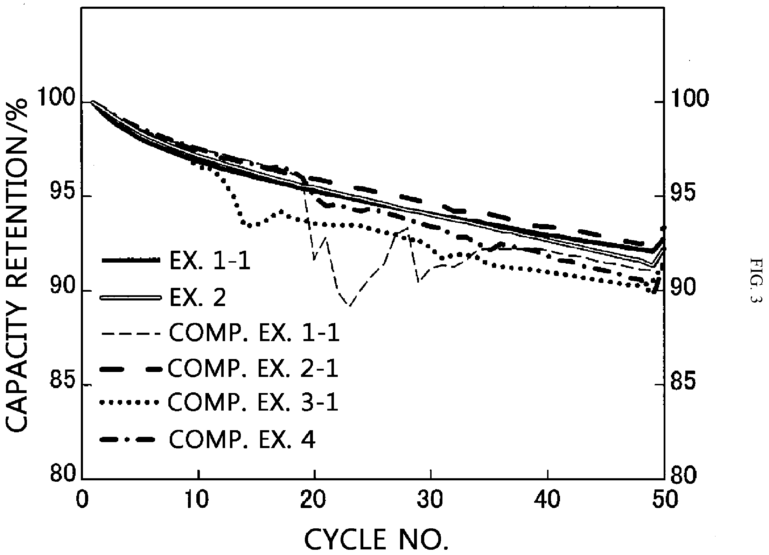

FIG. 3 is a graph illustrating a change in battery capacity during the $1^{st}$ to $50^{th}$ charge/discharge cycles in Examples 1-1 and 2, and Comparative Examples 1-1, 2-1, 3-1 and 4 by plotting the above-defined value of capacity retention as a function of cycle number. The discharge capacity of each of Examples and Comparative Examples at the $1^{st}$ cycle was taken as 100%. In terms of degradation of battery capacity, Comparative Examples 3-1 and 4 are relatively significantly degraded, while Examples 1-1 and 2 and Comparative Example 2-1 are relatively insignificantly degraded. In the case of Comparative Examples 1-1 and 3-1, the capacity retentions are changed significantly with a high amplitude as a function of cycle number. In FIG. 3, the results of the $1^{st}$ to $50^{th}$ charge/discharge cycles are enlarged to facilitate recognition of such a change.

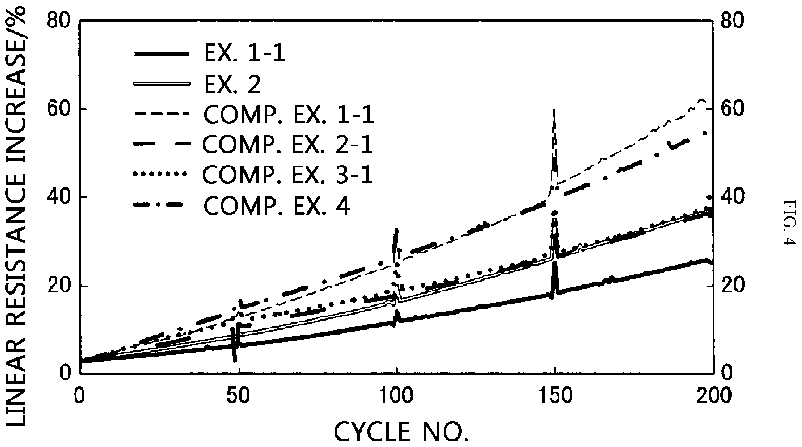

FIG. 4 is a graph illustrating a change in a change in direct current resistance during the $1^{st}$ to $200^{th}$ charge/discharge cycles in Examples 1-1 and 2, and Comparative Examples 1-1, 2-1, 3-1 and 4 by plotting the above-defined value of linear resistance increase as a function of cycle number. As charge/discharge cycles are repeated, all of Examples and Comparative Examples show an increase in linear resistance value. Referring to the linear resistance increase, Example 1-1 shows the smallest increase in linear resistance and Example 2 shows the second smallest increase in linear resistance. Meanwhile, Comparative Example 1-1 shows the largest increase in linear resistance.

(Results of Examples and Comparative Examples with Carbon Nanotubes Added)

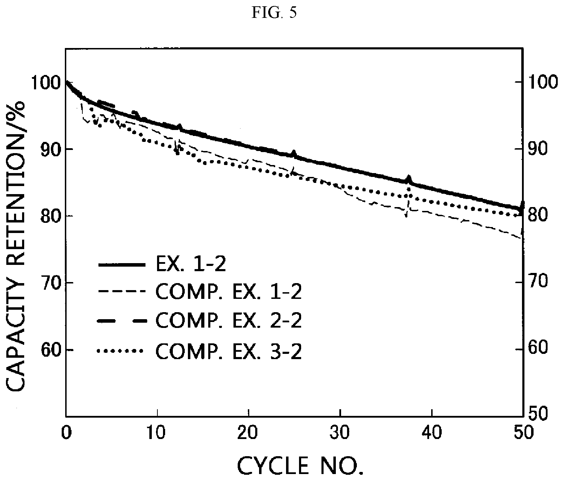

FIG. 5 is a graph illustrating a change in battery capacity during the $1^{st}$ to $50^{th}$ charge/discharge cycles in Example 1-2 and Comparative Examples 1-2, 2-2 and 3-2 by plotting the above-defined value of capacity retention as a function of cycle number. The discharge capacity of each of Example and Comparative Examples at the $1^{st}$ cycle was taken as 100%. In terms of degradation of battery capacity, Comparative Examples 1-2 and 3-2 are relatively significantly degraded, while Example 1-2 and Comparative Example 2-2 are relatively insignificantly degraded. In the case of Comparative Examples 1-2 and 3-2, the capacity retentions are changed significantly with a high amplitude as a function of cycle number.

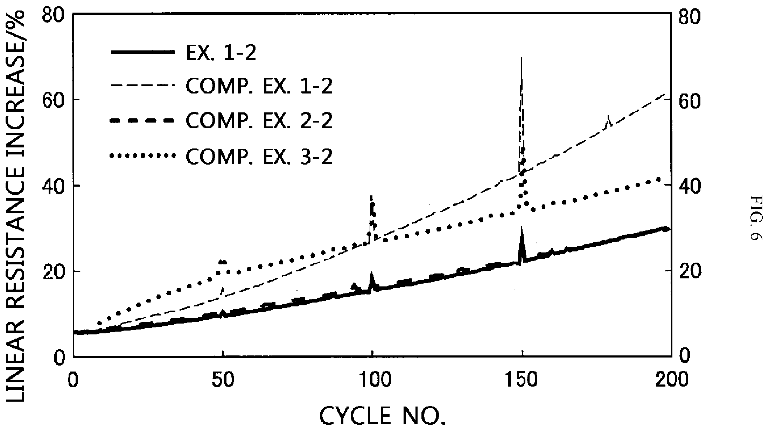

FIG. 6 is a graph illustrating a change in direct current resistance during the $1^{st}$to $200^{th}$ charge/discharge cycles in Example 1-2 and Comparative Examples 1-2, 2-2 and 3-2 by plotting the above-defined value of linear resistance increase as a function of cycle number. Similarly to FIG. 4, as charge/discharge cycles are repeated, all of Example and Comparative Examples show an increase in linear resistance value. Referring to the linear resistance increase, Example 1-2 shows the smallest increase in linear resistance, and Comparative Example 1-2 shows the largest increase in linear resistance.

[Test Example 5: Impedance after Repeating Charge/Discharge]

The mono-cell battery obtained according to each of Examples 1-1 and 1-2, and Comparative Examples 1-1, 1-2, 2-1, 2-2, 2-1 and 3-2 was determined in terms of impedance by using an impedance analyzer, after the completion of charging at the $1^{st}$ cycle and after the completion of charging at the $299^{th}$ cycle in the test of repetition of charge/discharge according to Test Example 4. The impedance of each negative electrode was calculated from the negative electrode impedance component appearing in the high-frequency side (1,000,000-100 Hz) of the resultant cole-cole plot. In addition, the impedance of each positive electrode was calculated from the positive electrode impedance component appearing in the low-frequency side (100-0.01 Hz) of the resultant cole-cole plot. The results are shown in the following Table 5. In Table 5, the impedance is expressed as a relative value (relative impedance) based on the value of impedance of Comparative

Example 1-1 at the 1st cycle or at the 299th cycle. Meanwhile, in the column of 'iodine, boron', a case in which only iodine is added is represented by 'I', a case in which only boron is added is represented by 'B', a case in which iodine and boron are added are represented by 'I, B', and a case in which both iodine and boron are not added is represented by '-'.

Relative impedance= Measured impedance/ Impedance of Comparative Example 1-1 [Mathematical Formula 8]

[Table 5]

| | | Examples | | Comparative Examples | | | | | |
|---|---|---|---|---|---|---|---|---|---|
| | | 1-1 | 1-2 | 1-1 | 1-2 | 2-1 | 2-2 | 3-1 | 3-2 |
| Iodine, boron | | I, B | I, B | - | - | I | I | B | B |
| CNT | | Null | Yes | Null | Yes | Null | Yes | Null | Yes |
| After the 1st charge | High-frequency side (Negative electrode side) | 1.17 | 0.73 | 1 | 0.51 | 0.94 | 0.65 | 1.20 | 0.61 |
| | Low-frequency side (Positive electrode side) | 1.44 | 1.22 | 1 | 1.14 | 1.13 | 1.52 | 2.97 | 2.47 |
| After the 299th charge | High-frequency side (Negative electrode side) | 0.15 | 0.02 | 1 | 0.06 | 0.93 | 0.02 | 0.10 | 0.03 |
| | Low-frequency side (Positive electrode side) | 0.22 | 0.15 | 1 | 1.23 | 0.15 | 0.10 | 1.04 | 1.45 |

First, Examples 1-1 and Comparative Examples 1-1, 2-1 and 3-1 in which carbon nanotubes are not used as a conductive material are discussed. When comparing Comparative Example 1-1 in which both iodine and boron are not added with Comparative Example 2-1 in which only iodine is added, the initial impedance after the 1st charge is not significantly changed by the addition of iodine. However, after repeating charge/discharge cycles, the impedance of the low-frequency side is significantly reduced. Meanwhile, when comparing Comparative Example 1-1 in which both iodine and boron are not added with Comparative Example 3-1 in which only boron is added, the initial impedance after the 1st charge is significantly increased by the addition of boron at the low-frequency side. However, after repeating charge/-discharge cycles, the impedance of the high-frequency side is significantly reduced, and the impedance of the low-frequency side is also reduced to a value equivalent to the impedance of Comparative Example 1-1. Therefore, this suggests that addition of iodine is effective for reducing the impedance of the low-frequency side (positive electrode side), and addition of boron is effective for reducing the impedance of the high-frequency side (negative electrode side). In Example 1-1 in which both iodine and boron are added, the effect of reducing the impedance of the low-frequency side (positive electrode side) can be balanced with the effect of reducing the impedance of the high-frequency side (negative electrode side). In addition, in the case of Example 1-1, it is possible to inhibit a significant increase in the initial impedance of the low-frequency side, caused by the addition of boron.

Next, when comparing Example 1-2 and Comparative Examples 1-2, 2-2 and 3-2 in which carbon nanotubes are used as a conductive material, substantially the same tendency as the cases using no carbon nanotubes is shown. In addition, when comparing Example 1-1 with Example 1-2 different in terms of the presence of carbon nanotubes, it can be seen that both the impedance of the high-frequency side and the impedance of the low-frequency side are reduced before and after carrying out charge/discharge cycles.

[Reference Example 1]

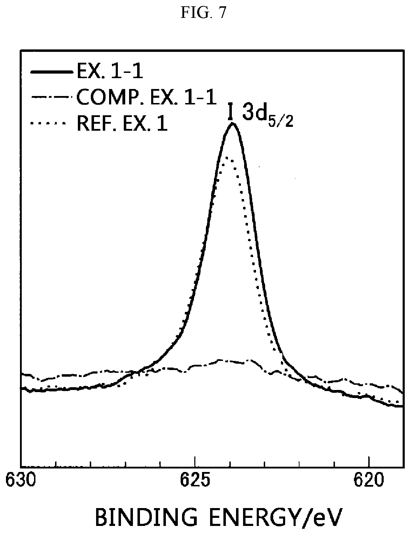

FIG. 7 illustrates the XPS spectrum of $I3d_{5/2}$ obtained by mixing orthoperiodic acid ($H_5IO_6$) as a coating film ingredient with a lithium transition metal oxide and firing the resultant mixture at 350°C for 5 hours. It can be seen from FIG. 7 that when using $H_5IO_6$ as an iodine-based coating material, the same spectrum as Example 1-1 using simple substance iodine as an iodine-based coating material is obtained. Meanwhile, orthoperiodic acid ($H_5IO_6$) is molten at 132°C and starts to be dehydrated to produce metaperiodic acid ($HIO_4$). In addition, $I_2O_4$ or iodine (V) oxide such as $I_2O_5$, is decomposed into oxygen and iodine at 275°C or higher. It is thought from the above that regardless of the valance number of iodine in the coating film ingredient (i.e. even when using metaperiodic acid ($HIO_4$), $I_2O_4$ or $I_2O_5$ is used as a coating material), iodine, after mixing with a lithium transition metal oxide and firing, has the same oxidation state as Example 1-1 using simple substance iodine.

## Claims

1. A positive electrode active material comprising:

    a core containing a lithium transition metal oxide;
    a coating portion at least partially covering the surface of the core and containing iodine and boron,
    wherein the spectrum of $I3d_{5/2}$ observed by X-ray photoelectron spectroscopy of the positive electrode active material has a peak at 622-626 eV,
    wherein the content of iodine is 0.001-5 parts by weight based on 100 parts by weight of lithium transition metal oxide, and
    wherein content of boron is 0.001-5 parts by weight based on 100 parts by weight of lithium transition metal oxide.

2. The positive electrode active material according to claim 1,
wherein the coating portion contains iodine having an oxidation number of +5 to +7.

3. A positive electrode active material slurry for a lithium-ion secondary battery, comprising the positive electrode active material as defined in any one of claims 1 or 2.

4. A positive electrode for a lithium-ion secondary battery which has a positive electrode active material layer, comprising the positive electrode active material as defined in any one of claims 1 or 2 and formed on a current collector.

5. The positive electrode according to claim4,
wherein the positive electrode active material layer further comprises a conductive material including carbon nanotubes.

6. A lithium-ion secondary battery comprising the positive electrode as defined in claim 4 or 5.

7. A method for preparing the positive electrode active material of claim 1, comprising the steps of:

    preparing a mixture containing a lithium transition metal oxide, iodine and boron;
    and
    firing the mixture.

8. The method for preparing a positive electrode active material according to claim 7, which comprises a step of adding an iodine-containing iodine ingredient as an ingredient of the mixture,
wherein the iodine ingredient comprises at least one selected from the group consisting of simple substance iodine ($I_2$), lithium iodide (LiI), sodium iodide (NaI), potassium iodide (KI), iodoform ($CHI_3$), carbon tetraiodide ($CI_4$), ammonium iodide ($NH_4I$), iodic acid ($HIO_3$), lithium iodate ($LiIO_3$), sodium iodate ($NaIO_3$), potassium iodate ($KIO_3$), ammonium iodate ($NH_4IO_3$), meta-periodic acid ($HIO_4$), ortho-periodic acid ($H_5IO_6$), lithium periodate ($LiIO_4$), sodium periodate ($NaIO_4$), potassium periodate ($KIO_4$), iodine oxide (IV) ($I_2O_4$), iodine oxide (V) ($I_2O_5$) and iodine oxide (IV, V) ($I_4O_9$).

9. The method for preparing a positive electrode active material according to claim 8,
wherein the iodine ingredient comprises simple substance iodine ($I_2$).

10. The method for preparing a positive electrode active material according to any one of claims 7 to 9, which comprises a step of adding a boron-containing boron ingredient as an ingredient of the mixture,
wherein the boron ingredient comprises at least one selected from the group consisting of $H_3BO_3$, $HBO_2$, $B_2O_3$, $LiBO_2$, $C_6H_5B(OH)_2$, $(C_6H_5O)_3B$, $[CH_3(CH_2)_3O]_3B$, $C_{13}H_{19}BO_3$, $C_3H_9B_3O_6$ and $(C_3H_7O)_3B$.

11. The method for preparing a positive electrode active material according to claim 10,
wherein the boron ingredient comprises boric acid ($H_3BO_3$).

12. The method for preparing a positive electrode active material according to any one of claims 7 to **11,** which comprises a step of firing the mixture at a firing temperature of 150-500°C.

## Patentansprüche

**1.** Aktives Material für eine positive Elektrode, umfassend:

einen Kern, der ein Lithium-Übergangsmetalloxid enthält;
einen Beschichtungsabschnitt, der die Oberfläche des Kerns mindestens teilweise bedeckt und Jod und Bor enthält,
wobei das mittels Röntgen-Photoelektronenspektroskopie des aktiven Materials für die positive Elektrode beobachtete $I3d_{5/2}$-Spektrum einen Peak bei 622-626 eV aufweist,
wobei der Jodgehalt 0,001-5 Gewichtsteile, basierend auf 100 Gewichtsteilen Lithium-Übergangsmetalloxid, ist, und
wobei der Borgehalt 0,001-5 Gewichtsteile, basierend auf 100 Gewichtsteilen Lithium-Übergangsmetalloxid, ist.

**2.** Aktives Material für eine positive Elektrode nach Anspruch 1,
wobei der Beschichtungsabschnitt Iod aufweisend eine Oxidationszahl von +5 bis +7 enthält.

**3.** Aufschlämmung eines aktiven Materials für eine positive Elektrode für eine Lithium-Ionen-Sekundärbatterie, umfassend das aktive Material für die positive Elektrode, wie in einem der Ansprüche 1 oder 2 definiert.

**4.** Positive Elektrode für eine Lithium-Ionen-Sekundärbatterie, die eine Schicht aus einem aktiven Material für eine positive Elektrode aufweist, umfassend das aktive Material für die positive Elektrode, wie in einem der Ansprüche 1 oder 2 definiert, und auf einem Stromkollektor gebildet.

**5.** Positive Elektrode nach Anspruch 4,
wobei die Schicht aus einem aktiven Material für die positive Elektrode weiter ein leitfähiges Material umfasst, das Kohlenstoffnanoröhren einschließt.

**6.** Lithium-Ionen-Sekundärbatterie, umfassend die positive Elektrode, wie in Anspruch 4 oder 5 definiert.

**7.** Verfahren zum Vorbereiten des aktiven Materials für eine positive Elektrode nach Anspruch 1, umfassend die folgenden Schritte:

Vorbereiten einer Mischung, die ein Lithium-Übergangsmetalloxid, Jod und Bor enthält; und
Brennen der Mischung.

**8.** Verfahren zum Präparieren eines aktiven Materials für eine positive Elektrode nach Anspruch 7, das einen Schritt umfasst, bei dem ein jodhaltiger Jodbestandteil als ein Bestandteil der Mischung zugegeben wird,
wobei der Jodbestandteil mindestens eines aus der Gruppe bestehend aus elementarem Jod ($I_2$), Lithiumjodid (LiI), Natriumiodid (NaI), Kaliumiodid (KI), Iodoform ($CHI_3$), Kohlenstofftetraiodid ($CI_4$), Ammoniumiodid ($NH_4I$), Iodsäure ($HIO_3$), Lithiumiodat ($LiIO_3$), Natriumiodat ($NaIO_3$), Kaliumiodat ($KIO_3$), Ammoniumiodat ($NH_4IO_3$), meta-Periodsäure ($HIO_4$), ortho-Periodsäure ($H_5IO_6$), Lithiumperiodat ($LiIO_4$), Natriumperiodat ($NaIO_4$), Kaliumperiodat ($KIO_4$), Iodoxid (IV) ($I_2O_4$), Iodoxid (V) ($I_2O_5$) und Iodoxid (IV, V) ($I_4O_9$) umfasst.

**9.** Verfahren zum Präparieren eines aktiven Materials für eine positive Elektrode nach Anspruch 8,
wobei der Jodbestandteil elementares Jod ($I_2$) umfasst.

**10.** Verfahren zum Präparieren eines aktiven Materials für eine positive Elektrode nach einem der Ansprüche 7 bis 9, das einen Schritt umfasst, bei dem ein borhaltiger Borbestandteil als ein Bestandteil der Mischung zugegeben wird,
wobei der Borbestandteil mindestens eines aus der Gruppe bestehend aus $H_3BO_3$, $HBO_2$, $B_2O_3$, $LiBO_2$, $C_6H_5B(OH)_2$, $(C_6H_5O)_3B$, $[CH_3(CH_2)_3O]_3B$, $C_{13}H_{19}BO_3$, $C_3H_9B_3O_6$ und $(C_3H_7O)_3B$ umfasst.

**11.** Verfahren zum Präparieren eines aktiven Materials für eine positive Elektrode nach Anspruch 10,
wobei der Borbestandteil Borsäure ($H_3BO_3$) umfasst.

**12.** Verfahren zum Präparieren eines aktiven Materials für eine positive Elektrode nach einem der Ansprüche 7 bis 11, das einen Schritt umfasst, bei dem die Mischung bei einer Brenntemperatur von 150-500 °C gebrannt wird.

## Revendications

1. Matériau actif d'électrode positive comprenant :

   un noyau contenant un oxyde de métal de transition au lithium ;
   une portion de revêtement recouvrant au moins partiellement la surface du noyau et contenant de l'iode et du bore,
   dans lequel le spectre de $I3d_{5/2}$ observé par spectroscopie photoélectronique à rayons X du matériau actif d'électrode positive présente un pic à 622-626 eV,
   dans lequel la teneur en iode est de 0,001-5 parties en poids sur la base de 100 parties en poids d'oxyde de métal de transition au lithium, et
   dans lequel la teneur en bore est de 0,001-5 parties en poids sur la base de 100 parties en poids d'oxyde de métal de transition au lithium.

2. Matériau actif d'électrode positive selon la revendication 1, dans lequel la portion de revêtement contient de l'iode présentant un nombre d'oxydation de +5 à +7.

3. Suspension de matériau actif d'électrode positive pour une batterie secondaire au lithium-ion, comprenant le matériau actif d'électrode positive tel que défini dans l'une quelconque des revendications 1 ou 2.

4. Électrode positive pour une batterie secondaire au lithium-ion qui présente une couche de matériau actif d'électrode positive, comprenant le matériau actif d'électrode positive tel que défini dans l'une quelconque des revendications 1 ou 2 et formé sur un collecteur de courant.

5. Électrode positive selon la revendication 4, dans laquelle la couche de matériau actif d'électrode positive comprend en outre un matériau conducteur incluant des nanotubes de carbone.

6. Batterie secondaire au lithium-ion comprenant l'électrode positive telle que définie dans la revendication 4 ou la revendication 5.

7. Procédé de préparation du matériau actif d'électrode positive selon la revendication 1, comprenant les étapes consistant à :

   préparer un mélange contenant un oxyde de métal de transition au lithium, de l'iode et du bore ; et
   calciner le mélange.

8. Procédé de préparation d'un matériau actif d'électrode positive selon la revendication 7, qui comprend une étape consistant à ajouter un ingrédient iodé contenant de l'iode en tant qu'ingrédient du mélange, dans lequel l'ingrédient iodé comprend au moins un choisi dans le groupe constitué d'iode élémentaire ($I_2$), iodure de lithium (LiI), iodure de sodium (NaI), iodure de potassium (KI), iodoforme ($CHI_3$), tétraiodure de carbone ($CI_4$), iodure d'ammonium ($NH_4I$), acide iodique ($HIO_3$), iodate de lithium ($LiIO_3$), iodate de sodium ($NaIO_3$), iodate de potassium ($KIO_3$), iodate d'ammonium ($NH_4IO_3$), acide métapériodique ($HIO_4$), acide orthopériodique ($H_5IO_6$), périodate de lithium ($LiIO_4$), périodate de sodium ($NaIO_4$), périodate de potassium ($KIO_4$), oxyde d'iode (IV) ($I_2O_4$), oxyde d'iode (V) ($I_2O_5$) et oxyde d'iode (IV, V) ($I_4O_9$).

9. Procédé de préparation d'un matériau actif d'électrode positive selon la revendication 8, dans lequel l'ingrédient iodé comprend de l'iode élémentaire ($I_2$).

10. Procédé de préparation d'un matériau actif d'électrode positive selon l'une quelconque des revendications 7 à 9, qui comprend une étape consistant à ajouter un ingrédient boré contenant du bore en tant qu'ingrédient du mélange, dans lequel l'ingrédient boré comprend au moins un choisi dans le groupe constitué de $H_3BO_3$, $HBO_2$, $B_2O_3$, $LiBO_2$, $C_6H_5B(OH)_2$, $(C_6H_5O)_3B$, $[CH_3(CH_2)_3O]_3B$, $C_{13}H_{19}BO_3$, $C_3H_9B_3O_6$ et $(C_3H_7O)_3B$.

11. Procédé de préparation d'un matériau actif d'électrode positive selon la revendication 10, dans lequel l'ingrédient boré comprend de l'acide borique ($H_3BO_3$).

12. Procédé de préparation d'un matériau actif d'électrode positive selon l'une quelconque des revendications 7 à 11, qui

comprend une étape consistant à calciner le mélange à une température de calcination de 150-500 °C.

FIG. 1

EX. 1-1
COMP. EX. 1-1
COMP. EX. 2-1
COMP. EX. 3-1
I 3d5/2
630
628
626
624
622
620
BINDING ENERGY/eV

FIG. 2

EX. 1-1
COMP. EX. 1-1
COMP. EX. 2-1
COMP. EX. 3-1
B 1s
196
194
192
190
188
BINDING ENERGY/eV

FIG. 3

CAPACITY RETENTION/%
100
95
90
85
80
0
10
20
30
40
50
CYCLE NO.
EX. 1-1
EX. 2
COMP. EX. 1-1
COMP. EX. 2-1
COMP. EX. 3-1
COMP. EX. 4

FIG. 4

LINEAR RESISTANCE INCREASE/%
80
60
40
20
0
0
50
100
150
200
CYCLE NO.
EX. 1-1
EX. 2
COMP. EX. 1-1
COMP. EX. 2-1
COMP. EX. 3-1
COMP. EX. 4

FIG. 5

CAPACITY RETENTION/%
100
90
80
70
60
50
0
10
20
30
40
50
CYCLE NO.
EX. 1-2
COMP. EX. 1-2
COMP. EX. 2-2
COMP. EX. 3-2

FIG. 6

LINEAR RESISTANCE INCREASE/%
80
60
40
20
0
CYCLE NO.
0
50
100
150
200
EX. 1-2
COMP. EX. 1-2
COMP. EX. 2-2
COMP. EX. 3-2

FIG. 7

EX. 1-1
COMP. EX. 1-1
REF. EX. 1
I 3d5/2
630
625
620
BINDING ENERGY/eV

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6284542 B
- JP 2017152275 A
- JP 2019175872 A
- US 20180175440 A1
- US 20070082265 A1